(19) Europäisches Patentamt
European Patent Office
Office européen des brevets

(11) **EP 3 960 451 A1**

(12) **EUROPEAN PATENT APPLICATION**
published in accordance with Art. 153(4) EPC

(43) Date of publication:
**02.03.2022 Bulletin 2022/09**

(21) Application number: **20795254.0**

(22) Date of filing: **24.04.2020**

(51) International Patent Classification (IPC):
***B32B 27/40*** *(2006.01)* ***C08L 75/04*** *(2006.01)*
***C08G 18/10*** *(2006.01)* ***C08G 18/32*** *(2006.01)*
***C08G 18/44*** *(2006.01)* ***C08G 18/65*** *(2006.01)*
***C08G 18/73*** *(2006.01)* ***C08G 18/75*** *(2006.01)*
***B29C 48/08*** *(2019.01)* ***B29C 48/10*** *(2019.01)*

(52) Cooperative Patent Classification (CPC):
**B29C 48/08; B29C 48/10; B32B 27/40; C08G 18/10; C08G 18/32; C08G 18/44; C08G 18/65; C08G 18/73; C08G 18/75; C08L 75/04**

(86) International application number:
**PCT/JP2020/017686**

(87) International publication number:
**WO 2020/218506 (29.10.2020 Gazette 2020/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.04.2019 JP 2019083087**
**24.04.2019 JP 2019083090**

(71) Applicant: **Mitsubishi Chemical Corporation**
**Chiyoda-ku**
**Tokyo 100-8251 (JP)**

(72) Inventors:
- **YAMASHITA, Ryo**
**Tokyo 100-8251 (JP)**
- **KOBAYASHI, Mitsuharu**
**Tokyo 100-8251 (JP)**
- **YAMANAKA, Takayuki**
**Tokyo 100-8251 (JP)**
- **OHARA, Teruhiko**
**Tokyo 100-8251 (JP)**

(74) Representative: **TBK**
**Bavariaring 4-6**
**80336 München (DE)**

# (54) THERMOPLASTIC POLYURETHANE RESIN ELASTOMER

(57) A thermoplastic polyurethane resin elastomer is obtained by reacting an isocyanate compound (I), an aliphatic alcohol (II) having only a hydroxyl group as a functional group and having a number average molecular weight determined from the hydroxyl value of less than 300, and a polyol (III) having a number average molecular weight determined from the hydroxyl value of not less than 300 and not more than 10,000. The isocyanate compound (I) comprises not less than 90 mol% in total of an aliphatic isocyanate compound containing two isocyanate groups and/or an alicyclic isocyanate compound containing two isocyanate groups. The aliphatic alcohol (II) comprises not less than 90 mol% of a C12 or lower aliphatic diol. The polyol (III) comprises not less than 80 mol% of a copolymerized polycarbonate diol (IIIA) including a repeating unit (A) illustrated below and a repeating unit (B) illustrated below. The equivalent ratio represented by hydroxyl equivalent (EIII) of polyol (III):isocyanate equivalent (EI) of isocyanate compound (I):hydroxyl equivalent (EII) of aliphatic alcohol (II) is 1:2-6:1-5 (with the proviso that $0.95 \le (EI)/((EII) + (EIII)) \le 1.05$). The number average molecular weight of the copolymerized polycarbonate diol (IIIA) is not less than 500 and not more than 5,000.

EP 3 960 451 A1

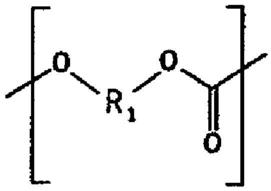 (A)

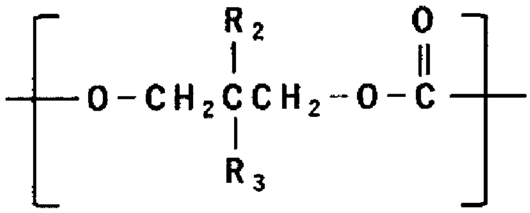 (B)

**Description**

Technical Field

The present invention relates to a thermoplastic polyurethane resin elastomer capable of giving shaped articles such as non-yellowing thermoplastic polyurethane resin elastomer film articles which have special mechanical characteristics required in various applications, specifically, show a wide change in elastic modulus depending on temperature and have excellent stress relaxation properties, and which further have an excellent balance in various durability properties such as weather resistance and chemical resistance. The present invention also relates to a method for producing the thermoplastic polyurethane resin elastomer, and to articles using the thermoplastic polyurethane resin elastomer, such as thermoplastic polyurethane film articles, tubes and elastic fibers.

Background Art

Thermoplastic polyurethane resin elastomers (TPU) are block copolymers that are composed of a hard segment formed by the reaction of a short-chain diol as a chain extender with a diisocyanate, and a soft segment formed by the reaction of a polyol with a diisocyanate. In TPU, these two segments exist as separate microphases without being compatibilized with each other, and form a higher-order structure composed of hard segment domains that are crystal phases formed by intermolecular cohesive force mainly stemming from hydrogen bonds, and a matrix that is based on the soft segment domains and shows high mobility on account of weak intermolecular force (Van der Waals force) (Non Patent Literature 1, p. 147).

General elastomers are characterized by:

1) being shaped without vulcanization unlike rubbers,
2) offering wide ranges of hardness and elasticity,
3) being self-reinforced and easy to color, and
4) being recyclable. While TPU have all these characteristics (Non Patent Literature 1, p. 145), some of the simple thermoplastic polyurethane resins having thermoplasticity do not satisfy the above four characteristics.

TPU have excellent characteristics such as mechanical strength, elastic characteristics, abrasion resistance and oil resistance compared to other thermoplastic resins (TPE), for example, polyester resins (TPEE), polyamide resins (TPAE), styrene resins (SBC), olefin resins (TPO) and vinyl chloride resins (TPVC). Thus, shaped articles produced from TPU by extrusion such as films, sheets, tubes and pipes, and other various shaped articles obtained by processes such as injection molding have found use in numerous applications. Exemplary applications of extruded articles include pressure resistant hoses, fire hoses, conveying belts, round belts, keyboards, hot-melt films, impermeable sheets, air belts and life preservers. Exemplary applications of injection molded articles include casters, gears, electric plugs, snow chains, sports shoes and watch bands.

TPU are generally obtained by reacting a diisocyanate compound, a short-chain diol and a long-chain diol. In particular, TPU that are most widely used are those obtained from raw materials including aromatic 4,4'-diphenylmethane diisocyanate (MDI) as an isocyanate compound and 1,4-butanediol (14BG) as a chain extender.

Long-chain diols may be classified into polyester diols, polyether diols and polycarbonate diols. Polyester diols are excellent in mechanical strength and abrasion resistance, but are poor in hydrolysis resistance. Polyether diols have excellent hydrolysis resistance, antibacterial properties and low-temperature flexibility, but are low in heat resistance, chemical resistance and weather resistance. Polycarbonate diols are excellent in hydrolysis resistance, heat resistance and weather resistance, but have a drawback in that they have high viscosity and are difficult to handle.

Thus, the long-chain diols are selected appropriately from polyester diols, polyether diols and polycarbonate diols in accordance with characteristics of the thermoplastic polyurethane resin elastomers that are required. Polycarbonate diols are used when durability is more important for the thermoplastic polyurethane resin elastomers. However, thermoplastic polyurethane resin elastomers having, as a structural unit, homopolycarbonate diol of 1,6-hexanediol show insufficient chemical resistance and are unsatisfactory in transparency and mechanical properties such as elastic modulus depending on applications.

Thermoplastic polyurethane resin elastomers are also used in, for example, films for protecting base materials such as automobile instrument panels and automobile exterior surfaces, medical catheters and tubes, polyurethane elastic fibers for clothing, soles and midsoles of footwear such as sports shoes, and mobile phone covers. In this case, greater importance is placed on, for example, durability such as weather resistance, light resistance, chemical resistance and stain resistance, appropriate stress relaxation, motion followability near body temperature, and adhesion.

Patent Literature 1 proposes a thermoplastic polyurethane resin elastomer characterized by using a chain extender having an aromatic group. This elastomer is based on a polycarbonate diol derived from 1,6-hexanediol and

shows shape memory at room temperature and above.

Patent Literature 2 proposes a yellowing-type thermoplastic polyurethane resin elastomer improved in flexibility, strength and water resistance. This polyurethane elastomer includes a main agent obtained by reacting a polycarbonate polyol, a polyether polyol and an aromatic polyisocyanate compound, and a curing agent such as 1,4-butanediol.

Patent Literature 3 describes that a polyurethane based on a polycarbonate diol derived from neopentyl glycol is useful in artificial leather applications to offer good texture, flexibility and high heat resistance, and also describes that paints produced using this polyurethane exhibit enhanced soft touch properties and attain good operability.

Patent Literature 4 describes that an automotive multilayered film using a thermoplastic polyurethane as part thereof is preferably heated at an elevated temperature of 40 to 100°C after being applied to enhance the flexibility and elongation of the film.

Patent Literature 5 proposes a laminate film with excellent weather resistance and heat resistance that is mainly used for a paint protection film. This film includes a polycarbonate-based thermoplastic polyurethane film, a urethane acrylate topcoat layer and a pressure-sensitive adhesive. The description of Patent Literature 5 does not suggest any specific structure of a polycarbonate diol that contributes to the advantageous effects of the present invention.

Patent Literature 1: JP2004-59706A
Patent Literature 2: JP2015-081278A
Patent Literature 3: JP2015-166466A
Patent Literature 4: JP2017-519652A
Patent Literature 5: JP2018-053193A

Non Patent Literature 1: "Saishin Polyurethane Zairyou to Ouyougijutsu (The Comprehensive Materials and Technology for a Novel Polyurethane Production)", CMC Publishing CO., LTD.

There are demands that thermoplastic polyurethane resin elastomers should show special mechanical characteristics in their applications, specifically, exhibit a wide change in elastic modulus depending on temperature and have excellent stress relaxation properties, and at the same time should be further enhanced in durability such as weather resistance, light resistance and chemical resistance. Weather resistance and chemical resistance are particularly important in automobile interior and exterior applications, electronic device protective cover applications, and thin film and sheet applications because any undesired consequences such as discoloration, chipping and breakage destroy the usability of the products.

The conventional thermoplastic polyurethane resin elastomers proposed in literature such as Patent Literature 1 and Patent Literature 2 show, in particular, a small change in elastic modulus depending on temperature and poor stress relaxation properties, thus encountering difficulties in concurrently satisfying mechanical properties and durability. The elastomer of Patent Literature 1 attains enhanced durability by being based on a polycarbonate, but is not suited for applications where the material requires flexibility to memorize the shape when heated at a low temperature.

The thermoplastic polyurethane resin elastomer obtained in Patent Literature 2 attains enhanced flexibility by blending of a polycarbonate with a polyalkylene ether glycol. However, polytetramethylene ether glycol used as the polyalkylene ether glycol has high crystallinity, and thus the elastomer lacks transparency and flexibility when heated, and is also poor and insufficient in durability compared to when the polycarbonate diol is used alone.

Patent Literature 3 proposes neopentyl glycol-derived polyurethane as a polycarbonate, but does not explicitly describe any specific compositions or effects of thermoplastic polyurethane resin elastomers.

## Summary of Invention

An object of the present invention is to provide a thermoplastic polyurethane resin elastomer capable of giving non-yellowing thermoplastic polyurethane films and other shaped articles which have special mechanical characteristics required in various applications, specifically, show a wide change in elastic modulus depending on temperature and have excellent stress relaxation properties, and which further have excellent durability properties such as weather resistance and chemical resistance. Other objects of the present invention are to provide a method for producing the thermoplastic polyurethane resin elastomer, and to provide articles using the thermoplastic polyurethane resin elastomer, such as thermoplastic polyurethane film articles, tubes, elastic fibers and electronic device protective covers.

The present inventors have found that a thermoplastic polyurethane resin elastomer obtained using a specific copolymerized polycarbonate diol, a specific polyisocyanate and a specific aliphatic alcohol in a specific ratio can solve the problems discussed hereinabove.

The present invention is summarized as follows.

[1] A thermoplastic polyurethane resin elastomer obtained by reacting an isocyanate compound (I), an aliphatic alcohol (II) having only a hydroxyl group as a functional group and having a number average molecular weight determined

from the hydroxyl value of less than 300, and a polyol (III) having a number average molecular weight determined from the hydroxyl value of not less than 300 and not more than 10,000, wherein

the isocyanate compound (I) comprises not less than 90 mol% in total of an aliphatic isocyanate compound containing two isocyanate groups and/or an alicyclic isocyanate compound containing two isocyanate groups,
the aliphatic alcohol (II) having only a hydroxyl group as a functional group and having a number average molecular weight determined from the hydroxyl value of less than 300 comprises not less than 90 mol% of a C12 or lower aliphatic diol,
the polyol (III) comprises not less than 80 mol% of a copolymerized polycarbonate diol (IIIA) including a linear repeating structural unit represented by the formula (A) below (hereinafter, written as the "repeating unit (A)") and a repeating structural unit represented by the formula (B) below (hereinafter, written as the "repeating unit (B)"),
the equivalent ratio represented by hydroxyl equivalent (EIII) of polyol (III):isocyanate equivalent (EI) of isocyanate compound (I):hydroxyl equivalent (EII) of aliphatic alcohol (II) is 1:2-6:1-5 (with the proviso that $0.95 \leq (EI)/((EII) + (EIII)) \leq 1.05$), and
the number average molecular weight determined from the hydroxyl value of the copolymerized polycarbonate diol (IIIA) is not less than 500 and not more than 5,000,

[Chem. 1]

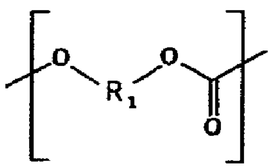 (A)

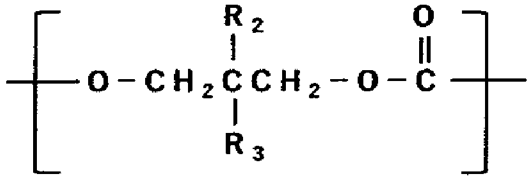 (B)

wherein the formula (A) above represents a structural unit derived from a transesterification reaction product of a C2-C20 hydrocarbon diol having no side chain groups, and a carbonate ester, and
the formula (B) above represents a structural unit derived from a transesterification reaction product of a 2-substituted 1,3-propanediol and a carbonate ester, in which $R_2$ denotes a C1-C4 aliphatic hydrocarbon group, $R_3$ denotes a C1-C4 aliphatic hydrocarbon group or a hydrogen atom, and $R_2$ and $R_3$ may be the same as or different from each other.

[2] The thermoplastic polyurethane resin elastomer according to [1], wherein the isocyanate compound (I) comprises not less than 80 mol% of an alicyclic isocyanate compound containing two isocyanate groups.

[3] The thermoplastic polyurethane resin elastomer according to [1] or [2], wherein the repeating unit (B) contained in the copolymerized carbonate polyol (IIIA) is such that $R_2$ is a methyl group and $R_3$ is a methyl group or a hydrogen atom.

[4] The thermoplastic polyurethane resin elastomer according to any one of [1] to [3], wherein the repeating unit (A) contained in the copolymerized carbonate polyol (IIIA) is derived from a transesterification reaction product of one or more of 1,3-propanediol, 1,4-butanediol, 1,5-pentanediol and 1,6-hexanediol with a carbonate ester.

[5] The thermoplastic polyurethane resin elastomer according to any one of [1] to [4], wherein the aliphatic isocyanate compound and/or the alicyclic isocyanate compound each containing two isocyanate groups in the molecule is one, or two or more selected from the group consisting of 1,6-hexamethylene diisocyanate, 4,4'-dicyclohexylmethane diisocyanate, 1,3-bis(isocyanatomethyl)cyclohexane, 1,5-pentamethylene diisocyanate and isophorone diisocyanate.

[6] The thermoplastic polyurethane resin elastomer according to any one of [1] to [5], wherein the aliphatic alcohol (II) is one, or two or more selected from the group consisting of ethylene glycol, 1,3-propanediol, 1,4-butanediol, 1,5-pentanediol and 1,6-hexanediol.

[7] The thermoplastic polyurethane resin elastomer according to any one of [1] to [6], wherein when the thermoplastic polyurethane resin elastomer is formed into a strip specimen in accordance with JIS K6301 (2010) having a width of 10 mm, a length of 100 mm and a thickness of about 50 μm, and when the specimen is tensile tested on a tensile tester (product name: "Tensilon UTM-III-100", manufactured by Orientec Co., Ltd.) from a chuck distance of 50 mm at a stress rate of 500 mm/min, temperatures of 23°C and 40°C and a relative humidity of 55% to determine the stress at 100% elongation (100% modulus), the strength ratio (by percentage) of the 100% modulus measured at 40°C to the 100% modulus measured at 23°C is not more than 70%, and the specimen has a stress retention rate of not more than 50% wherein the stress retention rate is the ratio of load (residual stress) after the specimen at 100% elongation (2.0 times as long as the original length) in the tensile test at 23°C is placed at rest for 10 minutes after discontinuation

of stretching.

[8] A method for producing a thermoplastic polyurethane resin elastomer comprising reacting an isocyanate compound (I), an aliphatic alcohol (II) having only a hydroxyl group as a functional group and having a number average molecular weight determined from the hydroxyl value of less than 300, and a polyol (III) having a number average molecular weight determined from the hydroxyl value of not less than 300 and not more than 10,000, wherein

the isocyanate compound (I) comprises not less than 90 mol% in total of an aliphatic isocyanate compound containing two isocyanate groups and/or an alicyclic isocyanate compound containing two isocyanate groups,
the aliphatic alcohol (II) having only a hydroxyl group as a functional group and having a number average molecular weight determined from the hydroxyl value of less than 300 comprises not less than 90 mol% of a C12 or lower aliphatic diol,
the polyol (III) comprises not less than 80 mol% of a copolymerized polycarbonate diol (IIIA) including a linear repeating structural unit represented by the formula (A) below (hereinafter, written as the "repeating unit (A)") and a repeating structural unit represented by the formula (B) below (hereinafter, written as the "repeating unit (B)"), and
the equivalent ratio of the hydroxyl equivalent (EIII) of the polyol (III), the isocyanate equivalent (EI) of the isocyanate compound (I) and the hydroxyl equivalent (EII) of the aliphatic alcohol (II) in the reaction is $0.95 \leq (EI)/((EII) + (EIII)) \leq 1.05$,

[Chem. 2]

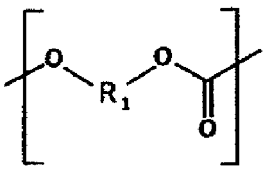 (A)

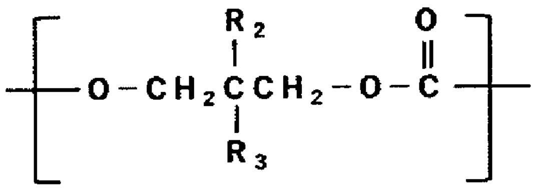 (B)

wherein the formula (A) above represents a structural unit derived from a transesterification reaction product of a C2-C20 hydrocarbon diol having no side chain groups, and a carbonate ester, and
the formula (B) above represents a structural unit derived from a transesterification reaction product of a 2-substituted 1,3-propanediol and a carbonate ester, in which $R_2$ denotes a C1-C4 aliphatic hydrocarbon group, $R_3$ denotes a C1-C4 aliphatic hydrocarbon group or a hydrogen atom, and $R_2$ and $R_3$ may be the same as or different from each other.

[9] The method according to [8] for producing a thermoplastic polyurethane resin elastomer, wherein the isocyanate compound (I), the aliphatic alcohol (II) and the polyol (III) are mixed with one another sufficiently by rapid stirring without a solvent, and the mixture is supplied to a device in which the mixture is continuously mixed, reacted and extruded, thereby producing a thermoplastic polyurethane resin elastomer continuously.

[10] A thermoplastic polyurethane resin elastomer composition comprising the thermoplastic polyurethane resin elastomer described in any one of [1] to [7], and one, or two or more kinds of additives selected from the group consisting of hindered phenolic antioxidants, UV absorbers, light stabilizers and lubricants.

[11] A thermoplastic polyurethane film article with a thickness of 30 μm to 2 mm obtained using the thermoplastic polyurethane resin elastomer described in any one of [1] to [7] or the thermoplastic polyurethane resin elastomer composition described in [10].

[12] A paint protective film for automobile exteriors or a decorative film for interiors and exteriors obtained using the thermoplastic polyurethane resin elastomer film article described in [11].

[13] A medical catheter or tube obtained by extruding the thermoplastic polyurethane resin elastomer described in any one of [1] to [7] or the thermoplastic polyurethane resin elastomer composition described in [10].

[14] A polyurethane elastic fiber obtained by melt-spinning the thermoplastic polyurethane resin elastomer described in any one of [1] to [7] or the thermoplastic polyurethane resin elastomer composition described in [10].

[15] A low-resilience shoe sole comprising the thermoplastic polyurethane resin elastomer described in any one of [1] to [7] or the thermoplastic polyurethane resin elastomer composition described in [10].

[16] An electronic device protective cover obtained by injection molding the thermoplastic polyurethane resin elastomer described in any one of [1] to [7] or the thermoplastic polyurethane resin elastomer composition described in [10].

Advantageous Effects of Invention

The thermoplastic polyurethane resin elastomer of the present invention is a non-yellowing thermoplastic polyurethane resin elastomer which has special mechanical characteristics required in various applications, specifically, shows a wide change in elastic modulus depending on temperature and has excellent stress relaxation properties, and which at the same time has an excellent balance in various durability properties such as weather resistance and chemical resistance. Shaped articles of the elastomer are also provided.

In the present invention, the term "durability" means chemical resistance, weather resistance, and the resistance to other various chemical and physical influences. Description of Embodiments

Hereinbelow, embodiments of the present invention will be described in detail. The present invention is not limited to those embodiments below, and various modifications are possible within the scope of the invention.

[Raw material compounds for thermoplastic polyurethane resin elastomers]

Raw material compounds used for the production of a thermoplastic polyurethane resin elastomer of the present invention will be described below.

<Isocyanate compounds (I)>

An isocyanate compound (I) is used as a raw material for producing a thermoplastic polyurethane resin elastomer of the present invention. The isocyanate compound (I) comprises not less than 90 mol% in total of an aliphatic isocyanate compound containing two isocyanate groups and/or an alicyclic isocyanate compound containing two isocyanate groups. Examples thereof include various known aliphatic polyisocyanate compounds and alicyclic polyisocyanate compounds.

In particular, the isocyanate compound (I) preferably comprises not less than 80 mol% of an alicyclic isocyanate compound containing two isocyanate groups. In this case, a thermoplastic polyurethane resin elastomer that is obtained advantageously exhibits a wide change in elastic modulus depending on temperature, and attains excellent properties such as stress relaxation properties, transparency and abrasion resistance.

Examples of the isocyanate compounds (I) include aliphatic diisocyanate compounds such as tetramethylene diisocyanate, hexamethylene diisocyanate, 2,2,4-trimethylhexamethylene diisocyanate, 2,4,4-trimethylhexamethylene diisocyanate, lysine diisocyanate, and dimer diisocyanates obtained by converting the carboxyl groups of dimer acids into isocyanate groups; and alicyclic diisocyanate compounds such as 1,4-cyclohexane diisocyanate, isophorone diisocyanate, 1-methyl-2,4-cyclohexane diisocyanate, 1-methyl-2,6-cyclohexane diisocyanate, 4,4'-dicyclohexylmethane diisocyanate (H12MDI) and 1,3-bis(isocyanatomethyl)cyclohexane (1,4-H6XDI).

These may be used singly, or two or more may be used in combination. In the case of combined use, the major component is preferably an isocyanate compound containing two isocyanate groups, and the content thereof is preferably not less than 90 mol%, more preferably not less than 95 mol%, and most preferably not less than 98 mol%. If the content of the major isocyanate compound is less than 90 mol%, properties such as mechanical properties and chemical resistance may be deteriorated.

The isocyanate compounds (I) that are used may include an isocyanate compound containing one isocyanate group as long as the addition of such a compound does not cause a significant change in properties of a thermoplastic polyurethane resin elastomer that is obtained. When an isocyanate compound containing one isocyanate group is used in combination, the content thereof is preferably not more than 5 mol%, more preferably not more than 3 mol%, and most preferably not more than 1 mol% of the isocyanate compounds (I). If the content of the isocyanate compound containing one isocyanate group is more than 5 mol%, a thermoplastic polyurethane resin elastomer that is obtained has a lowered molecular weight and shows low durability such as chemical resistance.

The isocyanate compounds (I) that are used may include an isocyanate compound containing three or more isocyanate groups as long as the addition of such a compound does not cause a significant change in properties of a thermoplastic polyurethane resin elastomer that is obtained. When an isocyanate compound containing three or more isocyanate groups is used in combination, the content thereof is preferably not more than 3 mol%, more preferably not more than 1 mol%, and most preferably not more than 0.5 mol% of the isocyanate compounds (I). If the content of the isocyanate compound containing three or more isocyanate groups is more than 3 mol%, a thermoplastic polyurethane resin elastomer exhibits poor properties after being crosslinked or cannot be shaped well, or is gelled and cannot be polymerized.

The isocyanate compounds (I) that are used may include an isocyanate compound having an aromatic ring as long as the addition of such a compound does not cause a significant change in properties of a thermoplastic polyurethane resin elastomer that is obtained. When an isocyanate compound having an aromatic ring is used in combination, the content thereof is preferably not more than 10 mol%, more preferably not more than 5 mol%, and most preferably not more than 1 mol% of the isocyanate compounds (I). If the content of the isocyanate compound having an aromatic ring

is more than 10 mol%, a thermoplastic polyurethane resin elastomer that is obtained exhibits poor weather resistance and low durability.

Among the isocyanate compounds (I) described above, 1,6-hexamethylene diisocyanate, 4,4'-dicyclohexylmethane diisocyanate, 1,3-bis(isocyanatomethyl)cyclohexane, 1,5-pentamethylene diisocyanate and isophorone diisocyanate are preferable from the point of view of the mechanical characteristics and durability of a thermoplastic polyurethane resin elastomer that is obtained, and also because such compounds are available in large amounts at low cost in the industry. 4,4'-Dicyclohexylmethane diisocyanate and 1,3-bis(isocyanatomethyl)cyclohexane are more preferable for the reason that a thermoplastic polyurethane resin elastomer that is obtained attains excellent properties such as weather resistance, light resistance, transparency, abrasion resistance and chemical resistance.

<Aliphatic alcohols (II) having only hydroxyl group as functional group and having number average molecular weight determined from hydroxyl value of less than 300>

An aliphatic alcohol (II) having only a hydroxyl group as a functional group and having a number average molecular weight determined from the hydroxyl value of less than 300 is used as a raw material for producing a thermoplastic polyurethane resin elastomer of the present invention. This aliphatic alcohol serves as a chain extender and is selected from low-molecular compound polyols having at least two active hydrogen atoms that react with isocyanate groups.

Hereinbelow, the "aliphatic alcohol (II) having only a hydroxyl group as a functional group and having a number average molecular weight determined from the hydroxyl value of less than 300" may be written as the "chain extender (II)".

The aliphatic alcohol (II) having only a hydroxyl group as a functional group and having a number average molecular weight determined from the hydroxyl value of less than 300 comprises not less than 90 mol% of a C12 or lower aliphatic diol. Any known aliphatic alcohols may be used which have only a hydroxyl group as a functional group and have a number average molecular weight determined from the hydroxyl value of less than 300. Specific examples of the aliphatic alcohols (II) having only a hydroxyl group as a functional group and having a number average molecular weight determined from the hydroxyl value of less than 300 include linear diols such as ethylene glycol, 1,3-propanediol, 1,4-butanediol, 1,5-pentanediol, 1,6-hexanediol, 1,8-octanediol, 1,9-nonanediol, 1,10-decanediol and 1,12-dodecanediol; diols having a branched chain such as 2-methyl-1,3-propanediol, 2,2-dimethyl-1,3-propanediol, 2,2-diethyl-1,3-propanediol, 2-methyl-2-propyl-1,3-propanediol, 2,4-heptanediol, 1,4-dimethylolhexane, 2-ethyl-1,3-hexanediol, 2,2,4-trimethyl-1,3-pentanediol, 2-methyl-1,8-octanediol, 2-butyl-2-ethyl-1,3-propanediol and dimer diols; diols having an ether group such as diethylene glycol and propylene glycol; diols having an alicyclic structure such as 1,4-cyclohexanediol, 1,4-cyclohexanedimethanol and 1,4-dihydroxyethylcyclohexane; and polyols such as glycerin, trimethylolpropane and pentaerythritol.

These chain extenders (II) may be used singly, or two or more may be used in combination. In the case of combined use, the major component is preferably a preferred diol described below, and the content thereof is preferably not less than 70 mol%, more preferably not less than 90 mol%, and most preferably not less than 98 mol% of the chain extenders (II). If the content of the main component is less than 70 mol% of the chain extenders (II), properties such as mechanical properties of a thermoplastic polyurethane resin elastomer that is obtained may be deteriorated.

Among the chain extenders (II) described above, C12 or lower linear aliphatic diols such as ethylene glycol, 1,3-propanediol, 1,4-butanediol, 1,5-pentanediol and 1,6-hexanediol are preferable for the reasons that a thermoplastic polyurethane resin elastomer that is obtained attains excellent flexibility and stress relaxation properties by virtue of excellent phase separation between the soft segments and the hard segments, and that such chain extenders are available in large amounts at low cost in the industry. In particular, 1,3-propanediol, 1,4-butanediol, 1,5-pentanediol and 1,6-hexanediol are more preferable. The content of these preferred linear aliphatic diols in the chain extenders (II) is preferably not less than 90 mol%. If a diol having a side chain is used as the chain extender (II), the cohesive force of hard segments in a thermoplastic polyurethane resin elastomer that is obtained is lowered, and consequently the thermoplastic polyurethane resin elastomer that is obtained may exhibit lowered properties such as mechanical properties. Among these linear diols, 1,4-butanediol is most preferable in terms of the balance of properties.

An aliphatic monoalcohol compound containing one hydroxyl group may also be used as an additional aliphatic alcohol (II) having only a hydroxyl group as a functional group and having a number average molecular weight determined from the hydroxyl value of less than 300 as long as the addition of such a compound does not cause a significant change in properties of a thermoplastic polyurethane resin elastomer that is obtained. When an aliphatic monool compound containing one hydroxyl group is used in combination, the content thereof is preferably not more than 5 mol%, more preferably not more than 3 mol%, and most preferably not more than 1 mol% of the aliphatic alcohols (II). If the monool compound represents more than 5 mol%, a thermoplastic polyurethane resin elastomer that is obtained has a lowered molecular weight and shows low durability such as chemical resistance.

An aliphatic polyhydric alcohol compound containing three or more hydroxyl groups such as glycerin, trimethylolpropane or pentaerythritol may also be used as an additional aliphatic alcohol (II) having only a hydroxyl group as a

functional group and having a number average molecular weight determined from the hydroxyl value of less than 300 as long as the addition of such a compound does not cause a significant change in properties of a thermoplastic polyurethane resin elastomer that is obtained. When an aliphatic polyhydric alcohol compound containing three or more hydroxyl groups is used in combination, the content thereof is preferably not more than 3 mol%, more preferably not more than 1 mol%, and most preferably not more than 0.5 mol% of the aliphatic alcohols (II). If the aliphatic polyhydric alcohol containing three or more hydroxyl groups represents more than 1 mol%, a thermoplastic polyurethane resin elastomer exhibits poor properties after being crosslinked or cannot be shaped well, or is gelled and cannot be polymerized.

An alcohol having an aromatic group or a compound containing active hydrogen other than the hydroxyl group, for example, a compound containing an amino group, a carboxyl group or the like may be used together with the aliphatic alcohol (II) having only a hydroxyl group as a functional group and having a number average molecular weight determined from the hydroxyl value of less than 300 as long as the addition of such a compound does not cause a significant change in properties of a thermoplastic polyurethane resin elastomer that is obtained. In the case of combined use, the content of such a compound is preferably not more than 5 mol%, more preferably not more than 3 mol%, and most preferably not more than 1 mol% relative to the aliphatic alcohol (II). Adding more than 5 mol% of such a compound other than the aliphatic alcohol (II) deteriorates the durability such as weather resistance, hue and hydrolysis resistance of a thermoplastic polyurethane resin elastomer that is obtained.

<Polyols (III) having number average molecular weight determined from hydroxyl value of not less than 300 and not more than 10,000>

(Copolymerized polycarbonate diols (IIIA))

A polyol (III) having a number average molecular weight determined from the hydroxyl value of not less than 300 and not more than 10,000 is used as a raw material for producing a thermoplastic polyurethane resin elastomer of the present invention. The polyol (III) comprises not less than 80 mol% of a copolymerized polycarbonate diol (IIIA) described below.

The copolymerized polycarbonate diol (IIIA) has a linear repeating structural unit represented by the formula

(A) below (hereinafter, written as the "repeating unit (A)") and a repeating structural unit represented by the formula (B) below (hereinafter, written as the "repeating unit (B) ") .

[Chem. 3]

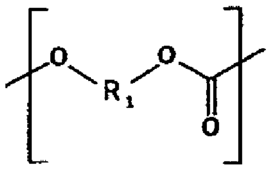
(A)

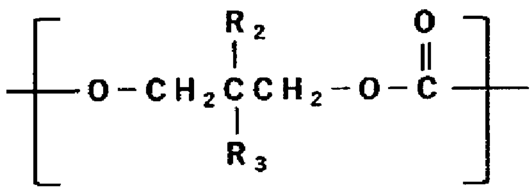
(B)

The above formula (A) represents a structural unit derived from a transesterification reaction product of a C2-C20 hydrocarbon diol having no side chain groups, and a carbonate ester.

The above formula (B) represents a structural unit derived from a transesterification reaction product of a 2-substituted 1,3-propanediol and a carbonate ester. $R_2$ denotes a C1-C4 aliphatic hydrocarbon group, and $R_3$ denotes a C1-C4 aliphatic hydrocarbon group or a hydrogen atom. $R_2$ and $R_3$ may be the same as or different from each other.

A thermoplastic polyurethane resin elastomer of the present invention is produced using, as a raw material, the above specific copolymerized polycarbonate diol (IIIA) having the repeating unit (A) and the repeating unit (B) while ensuring that the copolymerized polycarbonate diol (IIIA), the specific isocyanate compound (I) and the specific chain extender (II) have a specific compositional ratio. The thermoplastic polyurethane resin elastomer can give thermoplastic polyurethane resin elastomer shaped articles which have special mechanical characteristics required in various applications, specifically, show a wide change in elastic modulus depending on temperature and have excellent stress relaxation properties, and which further have excellent durability properties.

The repeating units (A) may be introduced into the copolymerized polycarbonate diol (IIIA) by using a C2-C20 linear aliphatic dihydroxy compound as a raw material diol for the copolymerized polycarbonate diol (IIIA).

In the repeating unit (A), the number of carbon atoms in the linear aliphatic dihydroxy compound is preferably 3 to 12, more preferably 3 to 6, and particularly preferably 4 or 6. From points of view such as industrial availability and

excellent properties of films or shaped articles using a thermoplastic polyurethane resin elastomer that is obtained, it is preferable that the repeating unit (A) be derived from 1,3-propanediol, 1,4-butanediol, 1,5-pentanediol and/or 1,6-hexanediol. 1,3-Propanediol and 1,4-butanediol are particularly preferable in the case where a thermoplastic polyurethane resin elastomer that is obtained will be used in an application in which chemical resistance is more important among other properties.

The repeating unit (B) represents a structural unit derived from a transesterification reaction product of a 2-substituted 1,3-propanediol and a carbonate ester. $R_2$ denotes a C1-C4 aliphatic hydrocarbon group, and $R_3$ denotes a C1-C4 aliphatic hydrocarbon group or a hydrogen atom. $R_2$ and $R_3$ may be the same as or different from each other.

Examples of the 2-substituted 1,3-propanediols for use in the repeating units (B) include neopentyl glycol, 2-methyl-1,3-propanediol, 2-butyl-2-ethyl-1,3-propanediol, 2,2-diethylpropanediol, 2-ethyl-1,3-propanediol, 2-ethyl-2-methyl-propanediol, 2,2-dipropyl-1,3-propanediol, 2-propyl-1,3-propanediol, 2-propyl-2-methyl-1,3-propanediol, 2-ethyl-2-propyl-1,3-propanediol and 2-butyl-2-ethyl-1,3-propanediol. When the branched chains $R_2$ and $R_3$ are both large, a thermoplastic polyurethane resin elastomer that is obtained tends to show low chemical resistance, low flexibility stemming from the increase in glass transition temperature, and low mold releasability, which is a measure of productivity, because of the crystallization rate being low. Further, shaped articles using such an elastomer tend to exhibit excessively high stress relaxation properties. From these viewpoints, it is most preferable that $R_2$ and $R_3$ be both methyl groups, or $R_2$ be a methyl group and $R_3$ be a hydrogen atom. That is, the 2-substituted 1,3-propanediol is most preferably neopentyl glycol or 2-methyl-1,3-propanediol.

The copolymerized polycarbonate diol (IIIA) may include only one kind, or two or more kinds of the repeating units (A), and may include only one kind, or two or more kinds of the repeating units (B). As long as the advantageous effects of the present invention are not impaired, the copolymerized polycarbonate diol (IIIA) may include repeating units other than the repeating units (A) and the repeating units (B) in an amount of, for example, not more than 20 mol% of all the repeating units.

In the copolymerized polycarbonate diol (IIIA), the molar ratio of the repeating units (B) to the repeating units (A) (repeating units (B)/repeating units (A), also written as the "molar ratio (B)/(A)") is preferably 0.03 to 10, more preferably 0.05 to 4, and particularly preferably 0.1 to 1. If the repeating units (A) are more and the repeating units (B) are less than the above range, films and shaped articles using a thermoplastic polyurethane resin elastomer that is obtained show a small change in elastic modulus depending on temperature and also a low stress relaxation rate, and may fail to attain appropriate mechanical characteristics. If, on the other hand, the repeating units (A) are less and the repeating units (B) are more than the above range, films and shaped articles using a thermoplastic polyurethane resin elastomer that is obtained exhibit excessively high stress relaxation properties and may fail to attain appropriate mechanical characteristics, and may also have low chemical resistance.

The molar ratio (B)/(A) of the copolymerized polycarbonate diol (IIIA) is measured by the method described later in the section of EXAMPLES.

If the copolymerized polycarbonate diol (IIIA) is replaced by a copolymerized polycarbonate diol having no side chains, for example, a copolymerized polycarbonate diol obtained using 1,5-pentanediol and 1,6-hexanediol as raw material diols, a thermoplastic polyurethane resin elastomer that is obtained shows a small change in elastic modulus depending on temperature and also exhibits a low stress relaxation rate, and further the chemical resistance is lowered. If the copolymerized polycarbonate diol (IIIA) is replaced by a homopolycarbonate diol, for example, a homo type obtained using 1,6-hexanediol as the only raw material diol, a thermoplastic polyurethane resin elastomer that is obtained shows a smaller change in elastic modulus depending on temperature and also exhibits a lower stress relaxation rate, and the chemical resistance is further lowered. In addition, the elastomer has lowered transparency due to the presence of crystallinity, and is disadvantageously unbalanced in properties and limited in applicability.

From the point of view of the mechanical characteristics of a thermoplastic polyurethane resin elastomer that is obtained, the number average molecular weight of the copolymerized polycarbonate diol (IIIA) determined from the hydroxyl value is preferably not less than 500 and not more than 5,000. If the number average molecular weight is less than 500, the thermoplastic polyurethane resin elastomer lacks flexibility that is a feature of thermoplastic polyurethane resin elastomers, and gives shaped articles having too high hardness. If the number average molecular weight is more than 5,000, shaped articles that are obtained have an excessively low elastic modulus and are poor in elastic recovery that is a feature of thermoplastic polyurethane resin elastomers. The number average molecular weight of the copolymerized polycarbonate diol (IIIA) is preferably not less than 800 and not more than 4,000, and more preferably not less than 1,000 and not more than 3,000.

Specifically, the number average molecular weight (Mn) of the copolymerized polycarbonate diol (IIIA) determined from the hydroxyl value is measured by the method described later in the section of EXAMPLES.

The lower limit of the hydroxyl value of the copolymerized polycarbonate diol (IIIA) is usually 22.4 mg-KOH/g, preferably 28.1 mg-KOH/g, and more preferably 37.4 mg-KOH/g, and the upper limit is usually 224.4 mg-KOH/g, preferably 140.3 mg-KOH/g, and more preferably 112.2 mg-KOH/g.

Specifically, the hydroxyl value of the copolymerized polycarbonate diol (IIIA) is measured by the method

described later in the section of EXAMPLES.

The copolymerized polycarbonate diol (IIIA) used as a raw material for producing a thermoplastic polyurethane resin elastomer of the present invention may be a single kind of a diol, or may be two or more kinds of diols differing from one another in, for example, repeating units, molar ratios thereof, or properties.

(Methods for producing copolymerized polycarbonate diols (IIIA))

The copolymerized polycarbonate diol (IIIA) may be produced by polymerizing a linear aliphatic dihydroxy compound for introducing repeating units (A), a 2-substituted 1,3-propanediol for introducing repeating units (B), and a carbonate compound that is a carbonate ester, in accordance with a known process in the presence of a catalyst while ensuring that the molar ratio (B)/(A) will fall in the aforementioned preferred range. The linear aliphatic dihydroxy compound used as a raw material dihydroxy compound has 2 to 20 carbon atoms, preferably 3 to 12 carbon atoms, more preferably 3 to 6 carbon atoms, and particularly preferably 4 or 6 carbon atoms and is, specifically, one, or two or more of, for example, 1,3-propanediol, 1,4-butanediol, 1,5-pentanediol, 1,6-hexanediol, 1,10-decanediol, 1,11-undecanediol, 1,12-dodecanediol, 1,13-tridecanediol, 1,14-tetradecanediol, 1,16-hexadecanediol and 1,18-octadecanediol, preferably one, or two or more of, for example, 1,4-butanediol, 1,5-pentanediol and 1,6-hexanediol. The 2-substituted 1,3-propanediol used as a raw material dihydroxy compound is preferably one, or two or more of, for example, neopentyl glycol and 2-methyl-1,3-propanediol.

The carbonate compound that is used in the production of the copolymerized polycarbonate diol (IIIA) is not limited as long as the advantageous effects of the present invention are not impaired. Examples thereof include dialkyl carbonates, diaryl carbonates and alkylene carbonates. A single or a plurality of these kinds of compounds may be used. From the point of view of reactivity, diaryl carbonates are preferable.

Specific examples of the carbonate compounds include dimethyl carbonate, diethyl carbonate, dibutyl carbonate, diphenyl carbonate and ethylene carbonate, with diphenyl carbonate being preferable.

In the production of the copolymerized polycarbonate diol (IIIA), a transesterification catalyst may be used as required in order to promote the polymerization.

Any compounds generally recognized as having transesterification ability may be used as the transesterification catalysts without limitation.

Examples of the transesterification catalysts include compounds of Group I metals (except hydrogen) in the long periodic table (hereinafter, simply written as the "periodic table") such as lithium, sodium, potassium, rubidium and cesium; compounds of Group II metals in the periodic table such as magnesium, calcium, strontium and barium; compounds of Group IV metals in the periodic table such as titanium and zirconium; compounds of Group V metals in the periodic table such as hafnium; compounds of Group IX metals in the periodic table such as cobalt; compounds of Group XII metals in the periodic table such as zinc; compounds of Group XIII metals in the periodic table such as aluminum; compounds of Group XIV metals in the periodic table such as germanium, tin and lead; compounds of Group XV metals in the periodic table such as antimony and bismuth; and compounds of lanthanoid metals such as lanthanum, cerium, europium and ytterbium. Among these, compounds of Group I metals in the periodic table (except hydrogen), compounds of Group II metals in the periodic table, compounds of Group IV metals in the periodic table, compounds of Group V metals in the periodic table, compounds of Group IX metals in the periodic table, compounds of Group XII metals in the periodic table, compounds of Group XIII metals in the periodic table, and compounds of Group XIV metals in the periodic table are preferable from the point of view of increasing the transesterification reaction rate. Compounds of Group I metals in the periodic table (except hydrogen) and compounds of Group II metals in the periodic table are more preferable, and compounds of Group II metals in the periodic table are still more preferable. Among the compounds of Group I metals in the periodic table (except hydrogen), compounds of lithium, potassium and sodium are preferable, compounds of lithium and sodium are more preferable, and compounds of sodium are still more preferable. Among the compounds of Group II metals in the periodic table, compounds of magnesium, calcium and barium are preferable, compounds of calcium and magnesium are more preferable, and compounds of magnesium are still more preferable. These metal compounds are mainly used as, for example, hydroxides or salts. Examples of the salts when the compounds are used as salts include halide salts such as chlorides, bromides and iodides; carboxylate salts such as acetate salts, formate salts and benzoate salts; inorganic acid salts such as carbonate salts and nitrate salts; sulfonate salts such as methanesulfonates, toluenesulfonates and trifluoromethanesulfonates; phosphorus-containing salts such as phosphate salts, hydrogen phosphate salts and dihydrogen phosphate salts; and acetylacetonate salts. The catalyst metals may also be used as alkoxides such as methoxide or ethoxide.

Among those described above, the transesterification catalyst that is used is preferably an acetate salt, a nitrate salt, a sulfate salt, a carbonate salt, a phosphate salt, a hydroxide, a halide or an alkoxide of at least one metal selected from Group II metals in the periodic table, more preferably an acetate salt, a carbonate salt or a hydroxide of a Group II metal in the periodic table, still more preferably an acetate salt, a carbonate salt or a hydroxide of magnesium or calcium, particularly preferably an acetate salt of magnesium or calcium, and most preferably magnesium acetate.

In the production of the copolymerized polycarbonate diol (IIIA), the carbonate compound may be used in any amount without limitation. Usually, the lower limit of the molar ratio relative to 1 mol of the total of the dihydroxy compounds is preferably 0.35, more preferably 0.50, and still more preferably 0.60, and the upper limit is preferably 1.00, more preferably 0.98, and still more preferably 0.97. If the amount of the carbonate compound used exceeds the above upper limit, the copolymerized polycarbonate diol (IIIA) that is obtained may have an increased proportion of components that are not terminated with a hydroxyl group or may have a molecular weight outside the predetermined range. If the amount of the carbonate compound used is below the above lower limit, the polymerization may not proceed to the predetermined molecular weight.

When the transesterification catalyst described above is used in the production of the copolymerized polycarbonate diol (IIIA), the amount thereof is preferably such that the performance is not adversely affected even if the catalyst remains in the polycarbonate diol that is obtained.

The amount in which the transesterification catalyst is used is such that the upper limit of the mass ratio of the metal to the mass of the raw material dihydroxy compounds is preferably 500 mass ppm, more preferably 100 mass ppm, still more preferably 50 mass ppm, and particularly preferably 10 mass ppm. On the other hand, the lower limit is preferably 0.01 mass ppm to ensure sufficient polymerization activity, and is more preferably 0.1 mass ppm, and still more preferably 1 mass ppm.

The reaction temperature in the transesterification reaction may be selected appropriately as long as a practical reaction rate can be obtained at the temperature. Usually, the lower limit of the reaction temperature is preferably 70°C, more preferably 100°C, and still more preferably 130°C. Usually, the upper limit of the reaction temperature is preferably 250°C, more preferably 230°C, and still more preferably 200°C. By controlling the reaction temperature to not more than the above upper limit, it is possible to prevent quality problems such as coloration or the formation of ether structures in the polycarbonate diol that is obtained.

The reaction temperature is preferably not more than 180°C, more preferably not more than 170°C, and still more preferably not more than 160°C throughout the entire process of the transesterification reaction for producing the copolymerized polycarbonate diol (IIIA). By controlling the reaction temperature to not more than 180°C throughout the entire process, it is possible to prevent easy occurrence of coloration under certain conditions.

The reaction may be carried out at atmospheric pressure. Since the transesterification reaction is an equilibrium reaction, the reaction may be biased toward producing more products by distilling off light boiling components that are generated out of the system. It is therefore usually preferable that reduced pressure conditions be adopted in the latter half of the reaction to perform the reaction while distilling off light boiling components. Alternatively, the reaction may be carried out in such a manner that the pressure is lowered gradually from some midpoint of the reaction so as to distill off light boiling components that are generated. Particularly preferably, the reaction is performed while increasing the degree of vacuum in the final stage of the reaction. In this manner, by-products such as monoalcohols, phenols and cyclic carbonates may be advantageously distilled off.

In the above case, the upper limit of the reaction pressure at the completion of the reaction is preferably 10 kPa, more preferably 5 kPa, and still more preferably 1 kPa.

To ensure that light boiling components will be distilled off effectively, the reaction may be carried out while flowing an inert gas such as nitrogen, argon or helium through the reaction system.

When the carbonate compound and/or the dihydroxy compounds used in the transesterification reaction are of low boiling point, an approach may be adopted in which the reaction is performed near the boiling point of the carbonate compound or the dihydroxy compounds at an early stage of the reaction, and the temperature is gradually raised as the reaction proceeds to a further stage. In this manner, it is possible to prevent the evaporation of the unreacted carbonate compound at an early stage of the reaction.

To prevent the evaporation of these raw materials, a reflux tube may be attached to the reactor and the reaction may be carried out while refluxing the carbonate compound and the dihydroxy compounds. In this case, the quantitative ratio of the reagents may be accurately controlled without loss of the raw materials charged.

The polymerization reaction may be carried out batchwise or continuously, and is preferably performed continuously for reasons such as product stability. Any type of an apparatus such as a tank, a tube or a tower may be used. For example, any of various known polymerization tanks equipped with a stirring blade may be used. The atmosphere in which the temperature in the apparatus is raised is not particularly limited, but is preferably an inert gas such as nitrogen gas at atmospheric pressure or a reduced pressure from the point of view of product quality.

The polymerization reaction is performed while measuring the molecular weight of the copolymerized polycarbonate diol (IIIA) produced and is terminated when the target molecular weight is reached. The reaction time required for the polymerization is not necessarily limited because it varies significantly depending on the types of the dihydroxy compounds and carbonate compound used, and the presence/absence and type of the catalyst used. Usually, the reaction time is preferably not more than 50 hours, more preferably not more than 20 hours, and still more preferably not more than 10 hours.

When the polymerization reaction involves a catalyst, the copolymerized polycarbonate diol (IIIA) that is obtained

usually contains the residual catalyst. The residual catalyst sometimes inhibits control of the polyurethane-forming reaction. To eliminate the influence of the residual catalyst, it is preferable that a catalyst deactivator such as a phosphorus compound be added in a molar amount substantially equal to that of the transesterification catalyst to deactivate the transesterification catalyst used. The transesterification catalyst may be deactivated efficiently by performing treatment such as heat treatment as will be described later, after the addition of the catalyst deactivator.

Examples of the phosphorus compounds used to deactivate the transesterification catalysts include inorganic phosphoric acids such as phosphoric acid and phosphorous acid, and organic phosphoric acid esters such as dibutyl phosphate, tributyl phosphate, trioctyl phosphate, triphenyl phosphate and triphenyl phosphite. These may be used singly, or two or more may be used in combination.

The amount in which the phosphorus compound is used is not particularly limited and may be approximately equimolar to the amount of the transesterification catalyst used. Specifically, the upper limit of the amount in which the phosphorus compound is used is preferably 5 mol, and more preferably 2 mol, and the lower limit is preferably 0.8 mol, and more preferably 1.0 mol, per mol of the transesterification catalyst used. If the phosphorus compound is used in an amount below the lower limit, the transesterification catalyst in the reaction product is not sufficiently deactivated, and the copolymerized polycarbonate diol (IIIA) that is obtained may still have a high level of reactivity with respect to isocyanate groups when the copolymerized polycarbonate diol (IIIA) is used as a raw material for producing a thermoplastic polyurethane resin elastomer. If the phosphorus compound is used in an amount exceeding the above range, the copolymerized polycarbonate diol (IIIA) that is obtained may be colored.

The deactivation of the transesterification catalyst by the addition of the phosphorus compound may be performed even at room temperature but is more efficient when combined with heat treatment. While the temperature of this heat treatment is not particularly limited, the upper limit is preferably 180°C, more preferably 150°C, still more preferably 120°C, and particularly preferably 100°C, and the lower limit is preferably 50°C, more preferably 60°C, and still more preferably 70°C. If the temperature is below the lower limit, the deactivation of the transesterification catalyst takes time and is not efficient, and the degree of deactivation may be insufficient. At temperatures above 180°C, the copolymerized polycarbonate diol (IIIA) that is obtained may be colored.

The amount of time of the reaction with the phosphorus compound is not particularly limited, but is usually 1 to 5 hours.

From the point of view of controlling the polyurethane-forming reaction, the amount of the catalyst remaining in the copolymerized polycarbonate diol (IIIA) is preferably not more than 100 mass ppm, and particularly preferably not more than 10 mass ppm in terms of metal. To ensure a required amount of catalyst, the amount of the catalyst remaining in the copolymerized polycarbonate diol (IIIA) is preferably not less than 0.01 mass ppm, more preferably not less than 0.1 mass ppm, and particularly preferably not less than 5 mass ppm in terms of metal.

The reaction product may be purified for the purpose of removing undesired substances in the product such as impurities having no hydroxyl groups at the polymer ends, phenols, the raw material dihydroxy compounds and carbonate compound, light boiling cyclic carbonate by-products, and the catalyst added.

The reaction product may be purified of light boiling compounds by distillation. Specifically, the type of distillation is not particularly limited and may be, for example, vacuum distillation, steam distillation or thin-film distillation. While any type of distillation may be adopted, thin-film distillation is particularly effective.

While the thin-film distillation conditions are not particularly limited, the upper limit of the temperature during the thin-film distillation is preferably 250°C, and preferably 200°C, and the lower limit is preferably 120°C, and more preferably 150°C.

The above lower limit of the temperature during the thin-film distillation ensures that light boiling components will be removed sufficiently effectively. By limiting the upper limit of the temperature during the thin-film distillation to 250°C, it is possible to prevent the coloration of the copolymerized polycarbonate diol (IIIA) that is obtained after the thin-film distillation.

The upper limit of the pressure during the thin-film distillation is preferably 500 Pa, more preferably 150 Pa, still more preferably 70 Pa, and particularly preferably 60 Pa. This upper limit of the pressure during the thin-film distillation ensures that light boiling components will be removed sufficiently effectively.

The upper limit of the temperature at which the copolymerized polycarbonate diol (IIIA) is held immediately before the thin-film distillation is preferably 250°C, and more preferably 150°C, and the lower limit thereof is preferably 80°C, and more preferably 120°C.

By controlling the holding temperature for the copolymerized polycarbonate diol (IIIA) immediately before the thin-film distillation to not less than the above lower limit, it is possible to prevent the decrease in the fluidity of the copolymerized polycarbonate diol (IIIA) immediately before the thin-film distillation. The above upper limit of the holding temperature ensures that the copolymerized polycarbonate diol (IIIA) that is obtained after the thin-film distillation will not be colored.

To remove water-soluble impurities from the copolymerized polycarbonate diol (IIIA) that is produced, the copolymerized polycarbonate diol (IIIA) may be washed with, for example, water, alkaline water, acidic water or a solution

of a chelating agent. In this case, the compound that is dissolved in water may be selected appropriately.

When, for example, a diaryl carbonate such as diphenyl carbonate is used as a raw material, phenols are by-produced during the production of the copolymerized polycarbonate diol (IIIA). Phenols are monofunctional compounds and thus may act as inhibitors in the production of a thermoplastic polyurethane resin elastomer. Further, urethane bonds formed by phenols have a weak bond strength and may be dissociated by heat applied during, for example, the subsequent steps, with the result that isocyanates and phenols may be regenerated and cause problems. Furthermore, phenols are irritants and therefore a smaller amount of phenols remaining in the copolymerized polycarbonate diol (IIIA) is more preferable. The residual amount of phenols in the copolymerized polycarbonate diol (IIIA), specifically, the mass ratio relative to the copolymerized polycarbonate diol (IIIA) is preferably not more than 1000 ppm, more preferably not more than 500 ppm, still more preferably not more than 300 ppm, and particularly preferably not more than 100 ppm. The amount of phenols in the copolymerized polycarbonate diol (IIIA) may be effectively reduced by, as described hereinabove, performing the polymerization reaction for the copolymerized polycarbonate diol (IIIA) in high vacuum at an absolute pressure of not more than 1 kPa, or subjecting the copolymerized polycarbonate diol (IIIA) to treatment such as thin-film distillation after the polymerization reaction.

The carbonate compound used as a raw material in the production may remain in the copolymerized polycarbonate diol (IIIA). While the residual amount of the carbonate compound in the copolymerized polycarbonate diol (IIIA) is not limited, a smaller amount is more preferable. The upper limit of the mass ratio thereof to the copolymerized polycarbonate diol (IIIA) is preferably 5 mass%, more preferably 3 mass%, and still more preferably 1 mass%. If the content of the carbonate compound in the copolymerized polycarbonate diol (IIIA) is too high, the polyurethane-forming reaction may be hindered. On the other hand, the lower limit thereof is not particularly limited but is preferably 0.1 mass%, more preferably 0.01 mass%, and still more preferably 0 mass%.

The dihydroxy compounds used in the production may remain in the copolymerized polycarbonate diol (IIIA). While the residual amount of the dihydroxy compounds in the copolymerized polycarbonate diol (IIIA) is not limited, a smaller amount is more preferable. The mass ratio thereof to the copolymerized polycarbonate diol (IIIA) is preferably not more than 1 mass%, more preferably not more than 0.1 mass%, and still more preferably not more than 0.05 mass%. If the residual amount of the dihydroxy compounds in the copolymerized polycarbonate diol (IIIA) is large, the molecular length of soft segment moieties in a thermoplastic polyurethane resin elastomer may be insufficient, and desired properties may not be obtained.

The copolymerized polycarbonate diol (IIIA) may contain a cyclic carbonate (a cyclic oligomer) that is by-produced during the production. When, for example, a 2,2-dialkyl-1,3-propanediol is used as the raw material dihydroxy compound for introducing the repeating units (B), the 5,5-dialkyl-1,3-dioxan-2-one or derivatives thereof such as cyclic carbonates formed of two or more molecules thereof may be generated and contained in the copolymerized polycarbonate diol (IIIA). More specifically, when 2,2-dimethyl-1,3-propanediol is used, 5,5-dimethyl-1,3-dioxan-2-one or derivatives thereof such as cyclic carbonates formed of two or more molecules thereof may be generated and contained in the copolymerized polycarbonate diol (IIIA). These compounds may cause side reactions in the polyurethane-forming reaction and may also cause turbidity. It is therefore preferable that as much as possible of such compounds be removed beforehand by, for example, performing the polymerization reaction for the copolymerized polycarbonate diol (IIIA) in high vacuum at an absolute pressure of not more than 1 kPa, or subjecting the copolymerized polycarbonate diol (IIIA) to thin-film distillation after the synthesis. While the content of cyclic carbonates such as 5,5-dialkyl-1,3-dioxan-3-one present in the copolymerized polycarbonate diol (IIIA) is not limited, the mass ratio thereof to the copolymerized polycarbonate diol (IIIA) is preferably not more than 3 mass%, more preferably not more than 1 mass%, and still more preferably not more than 0.5 mass%.

(Polyols other than copolymerized polycarbonate diols (IIIA) )

In the polyurethane-forming reaction for producing a thermoplastic polyurethane resin elastomer of the present invention, the copolymerized polycarbonate diol (IIIA) may be used in combination with an additional polyol as required as long as properties are not adversely affected. Here, the additional polyol other than the copolymerized polycarbonate diol (IIIA) is not particularly limited as long as it is used in usual polyurethane production. Known polyols may be used such as polyester polyols, polycaprolactone polyols, polyalkylene ether glycols, and polycarbonate polyols other than the copolymerized polycarbonate diols (IIIA).

Examples of the polyester polyols include those obtained by dehydration condensation of an aliphatic dibasic acid such as adipic acid or an aromatic dibasic acid such as phthalic anhydride, with an aliphatic glycol. Examples of the polyalkylene polyol ether glycols include poly(oxyethylene)glycols and poly(oxypropylene)glycols obtained by addition polymerization of ethylene oxide or propylene oxide, and polytetramethylene ether glycols (PTMG) obtained by ring-opening polymerization of tetrahydrofuran. Further, any known polyols such as polyolefin polyols may be used as the additional polyols.

Polyester polyols and polycaprolactone polyols are insufficient in durability such as hydrolysis resistance. Polyalkylene ether glycols do not have sufficient durability and are poor in weather resistance and chemical resistance. These may be added in an amount of not more than 20 mol% to the polyols (III) as long as properties are not adversely affected.

The additional polyols other than the copolymerized polycarbonate diols (IIIA) may be used singly, or two or more may be used in combination.

The polyol (III) used in the present invention has a number average molecular weight determined from the hydroxyl value of 300 to 10,000, preferably 500 to 5,000, and more preferably 800 to 3,000.

(Proportion of copolymerized polycarbonate diol (IIIA) in polyol(s) (III))

The proportion of the content of the copolymerized polycarbonate diol (IIIA) relative to the polyol or polyols (III) used in the production of a thermoplastic polyurethane resin elastomer of the present invention, that is, relative to the total of the copolymerized polycarbonate diol (IIIA) and any additional polyol other than the copolymerized polycarbonate diol (IIIA) is not less than 80 mol%, preferably not less than 90 mol%, more preferably not less than 95 mol%, and most preferably 98 to 100 mol%. If the proportion of the content of the copolymerized polycarbonate diol (IIIA) in the polyols (III) is low, the feature of the present invention may be lost, specifically, films and shaped articles using a thermoplastic polyurethane resin elastomer may fail to attain special mechanical characteristics, that is, may fail to show a wide change in elastic modulus depending on temperature and to have excellent stress relaxation properties, and at the same time may fail to have an excellent balance in various durability properties such as weather resistance and chemical resistance.

[Thermoplastic polyurethane resin elastomers]

A thermoplastic polyurethane resin elastomer of the present invention is a thermoplastic polyurethane resin elastomer obtained by reacting an isocyanate compound (I), an aliphatic alcohol (II) having only a hydroxyl group as a functional group and having a number average molecular weight determined from the hydroxyl value of less than 300, and a polyol (III) having a number average molecular weight determined from the hydroxyl value of not less than 300 and not more than 10,000. The isocyanate compound (I) comprises not less than 90 mol% in total of an aliphatic isocyanate compound containing two isocyanate groups and/or an alicyclic isocyanate compound containing two isocyanate groups. The aliphatic alcohol (II) having only a hydroxyl group as a functional group and having a number average molecular weight determined from the hydroxyl value of less than 300 comprises not less than 90 mol% of a C12 or lower aliphatic diol. The polyol (III) comprises not less than 80 mol% of a copolymerized polycarbonate diol (IIIA) including a repeating unit (A) and a repeating unit (B) represented by the formula (B) described hereinabove. In the thermoplastic polyurethane resin elastomer, the equivalent ratio represented by hydroxyl equivalent (EIII) of polyol (III):isocyanate equivalent (EI) of isocyanate compound (I):hydroxyl equivalent (EII) of aliphatic alcohol (II) is 1:2-6:1-5 (with the proviso that $0.95 \leq (EI)/((EII) + (EIII)) \leq 1.05$). The number average molecular weight determined from the hydroxyl value of the copolymerized polycarbonate diol (IIIA) is not less than 500 and not more than 5,000.

In the thermoplastic polyurethane resin elastomer of the present invention, the equivalent ratio of the hydroxyl equivalent (EIII) of the polyol (III), the isocyanate equivalent (EI) of the isocyanate compound (I) and the hydroxyl equivalent (EII) of the aliphatic alcohol (II) is $0.95 \leq (EI)/((EII) + (EIII)) \leq 1.05$.

The hydroxyl equivalent is the chemical formula weight per hydroxyl group in the polyol or the aliphatic alcohol.

The isocyanate equivalent is the chemical formula weight per isocyanate group in the isocyanate compound.

If the value of (EI)/((EII) + (EIII)) is less than 0.95, the thermoplastic polyurethane resin elastomer has insufficient properties such as chemical resistance and heat resistance. If the value of (EI)/((EII) + (EIII)) exceeds 1.05, the thermoplastic polyurethane resin elastomer is partially crosslinked and has an increased proportion of unreacted isocyanate groups being converted to amino groups by the reaction with water in the air, and consequently may suffer deterioration in shaping properties, may form a large number of fisheyes stemming from gelation, may be yellowed easily, and may exhibit insufficient mechanical strength such as elongation. The lower limit of (EI)/((EII) + (EIII)) is preferably not less than 0.97, and more preferably not less than 0.99. The upper limit of (EI)/((EII) + (EIII)) is preferably not more than 1.04, and more preferably not more than 1.03.

The value of (EI)/((EII) + (EIII)) in the thermoplastic polyurethane resin elastomer of the present invention may be determined from the mass ratio of the components at the time of polymerization or may be measured with an NMR (nuclear magnetic resonance spectrum) device usually at 400 MHz or above.

In the thermoplastic polyurethane resin elastomer of the present invention, the equivalent ratio represented by hydroxyl equivalent (EIII) of polyol (III):isocyanate equivalent (EI) of isocyanate compound (I):hydroxyl equivalent (EII) of aliphatic alcohol (II) is 1:2-6:1-5 while still satisfying the above value. That is, when the hydroxyl equivalent (EIII) of the polyol (III) is 1, the ratio represented by isocyanate equivalent (EI) of isocyanate compound (I)/hydroxyl equivalent (EII) of aliphatic alcohol (II) is 2/1, 3/2, 4/3, 5/4 or 6/5 when shown as an integer ratio, and includes an equivalent ratio between these ratios.

If the isocyanate equivalent (EI) of the isocyanate compound (I) is less than 2 relative to the hydroxyl equivalent (EIII) of the polyol (III) being 1, the thermoplastic polyurethane resin elastomer has insufficient mechanical strength and low breaking strength, or exhibits low elastic characteristics or insufficient heat resistance. If the isocyanate equivalent (EI) of the isocyanate compound (I) exceeds 6, the thermoplastic polyurethane resin elastomer has insufficient mechanical strength and low breaking elongation, or has an excessively high elastic modulus to show low elastic characteristics and also insufficient flexibility.

When the hydroxyl equivalent (EIII) of the polyol (III) is 1, the isocyanate equivalent (EI) of the isocyanate compound (I) is preferably 2.5 to 5.5 from the point of view of the balance between various properties and various durability properties, and is more preferably 3.0 to 5.0, and most preferably 3.0 to 4.5.

The thermoplastic polyurethane resin elastomer exhibits insufficient strength if the hydroxyl equivalent (EII) of the aliphatic alcohol (II) is less than 1 relative to the hydroxyl equivalent (EIII) of the polyol (III) being 1, and has insufficient flexibility if the hydroxyl equivalent of the aliphatic alcohol exceeds 5.

When the hydroxyl equivalent (EIII) of the polyol (III) is 1, the hydroxyl equivalent (EII) of the aliphatic alcohol (II) is preferably 1.5 to 4.5 from the point of view of the balance between strength and flexibility, and is more preferably 2.0 to 4.0, and most preferably 2.0 to 3.5.

The equivalent ratio of (EI), (EII) and (EIII) in the thermoplastic polyurethane resin elastomer may be determined by measurement with an NMR (nuclear magnetic resonance spectrum) device usually at 400 MHz or above.

The molecular weight of the thermoplastic polyurethane resin elastomer of the present invention is not particularly limited and may be controlled appropriately in accordance with the use application of the thermoplastic polyurethane resin elastomer of the present invention that is produced. The polystyrene-equivalent weight average molecular weight (Mw) measured by gel permeation chromatography (GPC) is preferably 50,000 to 500,000, and more preferably 100,000 to 300,000. If the weight average molecular weight (Mw) is below the above lower limit, sufficient strength, hardness and durability cannot be obtained in some cases. Above the upper limit, handleability such as shaping properties and workability tend to be impaired.

The molecular weight distribution (Mw/Mn) of the thermoplastic polyurethane resin elastomer of the present invention is preferably 1.5 to 3.5, more preferably 1.7 to 3.0, and most preferably 1.8 to 2.5. If the molecular weight distribution is higher than 3.5, shaping properties are insufficient. Controlling the molecular weight distribution to below 1.5 requires a special purification treatment and is economically disadvantageous. The molecular weight distribution may be measured by GPC.

In the thermoplastic polyurethane resin elastomer of the present invention, the elastic modulus at 100% elongation measured by a tensile test at room temperature is preferably 1 MPa to 20 MPa, and more preferably 2 MPa to 15 MPa. When the elastomer will be used in such applications as films and sheets, the elastic modulus is particularly preferably 3 MPa to 10 MPa. If the elastic modulus at 100% elongation is less than 1 MPa, mechanical strength is insufficient and breaking strength is low. If the elastic modulus at 100% elongation is more than 15 MPa, mechanical strength is insufficient, breaking elongation is small, and elastic characteristics are low. The elastic modulus at 100% elongation may be measured by a tensile test in accordance with JIS K6301 (2010).

In the thermoplastic polyurethane resin elastomer of the present invention, the durometer hardness is preferably Shore A70 to Shore D80, and more preferably Shore A75 to Shore D65. For such applications as films and sheets, Shore A80 to Shore D65 are particularly preferable. When flexibility is strongly required, Shore A80 to Shore A95 are particularly preferable. If the hardness is below Shore A70, the elastomer may not be cut well, may tend to fuse during drying, and may show poor mold releasability during molding. If the hardness exceeds Shore D80, elastic characteristics are insufficient. The Shore hardness may be measured with a hardness meter.

In the thermoplastic polyurethane resin elastomer of the present invention, the melt viscosity is important for film and sheet applications. The melt mass flow rate (MFR) is preferably 0.05 to 150 g/10 min, and more preferably 0.1 to 100 g/10 min as measured with a melt mass flow rate measuring device (device name: Melt Indexer, manufactured by TATEYAMA KAGAKU CO., LTD.) under a load of 2.16 kg at a usual shaping temperature of 150°C to 220°C in accordance with JIS 7210 (ISO 1133). If the melt viscosity is lower than 0.05 g/10 min, the elastomer is poorly flowable and requires an elevated shaping temperature. If the melt viscosity is higher than 150 g/10 min, the elastomer is excessively flowable and the shaping temperature needs to be lowered. Further, if the melt viscosity changes widely during the shaping process due to the heat resistance of the resin, it is difficult to form a film or a sheet with a uniform thickness.

The yellow index (YI) of the thermoplastic polyurethane resin elastomer of the present invention is preferably not more than 10, more preferably not more than 5, and most preferably not more than 3. If the yellow index (YI) is higher than 10, films or sheets disadvantageously look yellow even when the thickness is small. The YI may be measured by the method described in JIS K7373.

The transparency of products such as shaped articles using the thermoplastic polyurethane resin elastomer of the present invention may be usually measured with a haze meter or by a visual test. Shaped articles using the thermoplastic polyurethane resin elastomer of the present invention have excellent transparency.

When the thermoplastic polyurethane resin elastomer of the present invention is formed into a strip specimen

in accordance with JIS K6301 (2010) having a width of 10 mm, a length of 100 mm and a thickness of about 50 μm, and when the specimen is tensile tested on a tensile tester (product name: "Tensilon UTM-III-100", manufactured by Orientec Co., Ltd.) from a chuck distance of 50 mm at a stress rate of 500 mm/min, temperatures of 23°C and 40°C and a relative humidity of 55% to determine the stress at 100% elongation (100% modulus), the strength ratio in percentage of the 100% modulus measured at 40°C to the 100% modulus measured at 23°C (hereinafter, sometimes written as "40°C (100% M)/23°C (100% M)") is preferably not more than 70%, and the specimen preferably has a stress retention rate of not more than 50% wherein the stress retention rate is the ratio of load (residual stress) after the specimen at 100% elongation (2.0 times as long as the original length) in the tensile test at 23°C is placed at rest for 10 minutes after the discontinuation of stretching. The thermoplastic polyurethane resin elastomer satisfying these properties is highly suited for applications described later.

If 40°C (100% M)/23°C (100% M) exceeds 70%, the elastomer is less effective in being easy to handle with high tension and strength at room temperature while becoming flexible when heated slightly to offer excellent properties such as workability. 40°C (100% M)/23°C (100% M) is preferably between 20 and 70%, more preferably between 35 and 65%, and still more preferably between 30 and 60%.

A small value of the stress retention rate described above means that stress relaxation properties are high. When a film or sheet is applied or formed, the shape is fixed in many cases after the film or sheet is slightly stretched. If the stress retention rate is higher than 50%, the elastomer tends to return to the original size and is wrinkled, that is, has low dimensional stability. The stress retention rate is preferably in the range of 45 to 10%, and more preferably 40 to 20%.

In addition to the properties described above, the thermoplastic polyurethane resin elastomer of the present invention is preferably chemical resistant, and preferably has oleic acid resistance and shows a mass change of not more than 55% as measured by the following method.

<Oleic acid resistance>

A 3 cm × 3 cm specimen is cut out from a film of the thermoplastic polyurethane resin elastomer. The mass of the specimen is measured with a precision balance. The specimen is then added to a 250 ml volume glass bottle containing 50 ml of oleic acid as a test solvent, and is allowed to stand in a nitrogen atmosphere in a thermostatic chamber at 80°C for 16 hours. After the test, the specimen is taken out, the front and back sides are lightly wiped with a paper wiper, and the mass is measured with the precision balance to calculate the mass change (the rate of increase) from the mass before the test.

[Methods for producing thermoplastic polyurethane resin elastomers]

The thermoplastic polyurethane resin elastomer of the present invention may be produced by usual polyurethane-forming reaction generally used in experiments or in industry, except that the isocyanate compound (I), the aliphatic alcohol (II) having only a hydroxyl group as a functional group and having a number average molecular weight determined from the hydroxyl value of less than 300, and the polyol (III) comprising the copolymerized polycarbonate diol (IIIA) and having a number average molecular weight determined from the hydroxyl value of not less than 300 and not more than 10,000, in the predetermined ratio described hereinabove.

Here, the use of a solvent in the production of the thermoplastic polyurethane resin elastomer of the present invention is not advantageous in industry because the shaping process requires a step for removing the solvent. Further, solvents have high environmental impacts. It is therefore preferable that the reaction be performed without a solvent (in the absence of a solvent).

For example, the thermoplastic polyurethane resin elastomer of the present invention may be produced efficiently by reacting the copolymerized polycarbonate diol (IIIA), the isocyanate compound (I) and the chain extender (II) continuously in one shot in the range of 150°C to 210°C (one-step method).

Alternatively, the thermoplastic polyurethane resin elastomer of the present invention may be produced by first reacting the copolymerized polycarbonate diol (IIIA) with an excess of the isocyanate compound (I) to form a prepolymer having an isocyanate group at a terminal, and further reacting the prepolymer with the chain extender (II) to increase the degree of polymerization (two-step method).

In an exemplary preferred method for producing the thermoplastic polyurethane resin elastomer without a solvent, the isocyanate compound (I), the aliphatic alcohol (II) and the polyol (III) are mixed with one another sufficiently by rapid stirring without a solvent, and the mixture is supplied to a device in which the mixture is continuously mixed, reacted and extruded, thereby producing the thermoplastic polyurethane resin elastomer continuously.

<Chain terminators>

In the production of the thermoplastic polyurethane resin elastomer of the present invention, a chain terminator having one active hydrogen group may be added in a small amount as required for the purpose of controlling the molecular weight of the thermoplastic polyurethane resin elastomer that is obtained.
Examples of the chain terminators include aliphatic monools having one hydroxyl group, such as methanol, ethanol, propanol, butanol and hexanol.
These may be used singly, or two or more may be used in combination.

<Catalysts>

In the production of the thermoplastic polyurethane resin elastomer of the present invention, a catalyst may be used for the urethane-forming reaction. Examples of the urethane-forming reaction catalysts include organic tin compounds, organic zinc compounds, organic bismuth compounds, organic titanium compounds, organic zirconium compounds and amine compounds. The urethane-forming reaction catalysts may be used singly, or two or more may be used in combination.
When the urethane-forming reaction catalyst is used, it is recommended that the concentration thereof be controlled to 0.1 to 100 mass ppm relative to the mass of the thermoplastic polyurethane resin elastomer. By using 0.1 or more mass ppm of the urethane-forming reaction catalyst, the thermoplastic polyurethane resin elastomer maintains the initial molecular weight at a sufficiently high level even after being shaped, and tends to exhibit the inherent properties of the thermoplastic polyurethane resin elastomer effectively even in the form of a shaped article.
Among the urethane-forming reaction catalysts, organic tin compounds are preferable. Examples of the organic tin compounds include tin-containing acylate compounds and tin-containing mercaptocarboxylate salts. Specific examples thereof include tin octylate, monomethyltin mercaptoacetate salt, monobutyltin triacetate, monobutyltin monooctylate, monobutyltin monoacetate, monobutyltin maleate salt, monobutyltin maleic acid benzyl ester salt, monooctyltin maleate salt, monooctyltin thiodipropionate salt, monooctyltin tris(isooctylthioglycolic acid ester), monophenyltin triacetate, dimethyltin maleic acid ester salt, dimethyltin bis(ethylene glycol monothioglycolate), dimethyltin bis(mercaptoacetic acid) salt, dimethyltin bis(3-mercaptopropionic acid) salt, dimethyltin bis(isooctyl mercaptoacetate), dibutyltin diacetate, dibutyltin dioctoate, dibutyltin distearate, dibutyltin dilaurate, dibutyltin maleate salt, dibutyltin maleate salt polymer, dibutyltin maleic acid ester salt, dibutyltin bis(mercaptoacetic acid), dibutyltin bis(mercaptoacetic acid alkyl ester) salt, dibutyltin bis(3-mercaptopropionic acid alkoxybutyl ester) salt, dibutyltin bisoctylthioglycol ester salt, dibutyltin (3-mercaptopropionic acid) salt, dioctyltin maleate salt, dioctyltin maleic acid ester salt, dioctyltin maleate salt polymer, dioctyltin dilaurate, dioctyltin bis(isooctyl mercaptoacetate), dioctyltin bis(isooctylthioglycolic acid ester), and dioctyltin bis(3-mercaptopropionic acid) salt.
The isocyanate compound (I) used as a raw material in the present invention comprises an aliphatic isocyanate compound and/or an alicyclic isocyanate compound. These compounds are lower in reactivity than aromatic isocyanate compounds, and thus the use of a tin catalyst or the like is preferable. The use of a catalyst is more preferable when 4,4'-dicyclohexylmethane diisocyanate having particularly low reactivity is used.
When 4,4'-dicyclohexylmethane diisocyanate having particularly low reactivity is used, the onset of curing after polymerization is slow even when a catalyst is used. It is therefore preferable that the elastomer be aged at a temperature of 20°C to 120°C for 10 or more hours. If not aged sufficiently, the thermoplastic polyurethane resin elastomer may not attain a sufficiently high degree of polymerization and properties may be deteriorated.

<One-step methods>

A known one-step method described in literature such as JP-2004-182980A may be adopted for industrial production. For example, the thermoplastic polyurethane resin elastomer may be produced by continuously supplying the polyol (III) comprising the copolymerized polycarbonate diol (IIIA), the chain extender (II), the isocyanate compound (I) and optionally other components as required simultaneously or substantially simultaneously to a single-screw or multi-screw extruder or a static mixer, and continuously meltpolymerizing the mixture at 150 to 220°C, preferably 160 to 210°C.
In the production of the thermoplastic polyurethane resin elastomer of the present invention, the isocyanate compound (I), the chain extender (II) and the polyol (III) may be mixed with one another sufficiently by rapid stirring without a solvent, and the mixture may be supplied continuously to a single-screw or multi-screw extruder or a static mixer to produce a thermoplastic polyurethane resin elastomer continuously. This production method is effective when an aliphatic isocyanate compound and/or an alicyclic isocyanate compound having low reactivity is used. The isocyanate compound (I), the chain extender (II) and the copolymerized polycarbonate diol (IIIA) are not compatible well with one another and, particularly when the reactivity is slow, the components tend to separate before the reaction proceeds, possibly failing to produce a uniform thermoplastic polyurethane resin elastomer. Thus, it is preferable to forcibly mix

the components beforehand with a rapid stirrer.

<Two-step methods>

The two-step method is also called a prepolymer process and is mainly performed by the following procedures.
The polyol (III) comprising the copolymerized polycarbonate diol (IIIA) and an excess of the isocyanate compound (I) are reacted in an isocyanate compound (I)/polyol (III) reaction equivalent ratio of more than 1 and not more than 10.0 to produce a prepolymer having an isocyanate group at a terminal of the molecular chain, and the chain extender (II) is added to the prepolymer to produce a thermoplastic polyurethane resin elastomer.
The two-step method may be performed without a solvent or in the presence of a solvent. The production of the thermoplastic polyurethane resin elastomer by the two-step method may be carried out by any of the processes (1) to (3) described below.

(1) Without using a solvent, the isocyanate compound (I) and the polyol (III) comprising the copolymerized polycarbonate diol (IIIA) are reacted first directly with one another to synthesize a prepolymer. The prepolymer is then used directly for the chain-extending reaction.
(2) A prepolymer is synthesized by the process (1) and is then dissolved into a solvent and used for the subsequent chain-extending reaction.
(3) The isocyanate compound (I) and the polyol (III) comprising the copolymerized polycarbonate diol (IIIA) are reacted with one another in a solvent, and thereafter the chain-extending reaction is performed.

In the chain-extending reaction in the process (1), it is important that the thermoplastic polyurethane resin elastomer be obtained as a mixture with a solvent by, for example, dissolving the chain extender (II) into a solvent, or dissolving the prepolymer and the chain extender (II) into a solvent at the same time.
Among the production processes described above, melt polymerization substantially in the absence of a solvent is preferable when the target product is a thermoplastic polyurethane resin elastomer having excellent melt-forming properties and mechanical characteristics, and a continuous melt polymerization process using a multi-screw extruder is more preferable. A thermoplastic polyurethane resin elastomer obtained by a continuous melt polymerization process is generally excellent in strength compared to thermoplastic polyurethane resin elastomers obtained by solid-phase polymerization at 80 to 130°C. Further, the one-step method is advantageous in that the target thermoplastic polyurethane resin elastomer can be continuously produced very easily by simply supplying all the reaction components to the extruder simultaneously or substantially simultaneously.
Where necessary, additives such as a catalyst and a stabilizer may be added in the production of the thermoplastic polyurethane resin elastomer. For example, commercially available triphenyl phosphite (TPP) or the like may be added as an approach to enhancing the stability of the isocyanate compound (I) and stabilizing the production.

<Reaction molar ratios>

In any of the production methods described above, the urethane-forming reaction for producing the thermoplastic polyurethane resin elastomer of the present invention is performed while ensuring that the equivalent ratio will be $0.95 \leq (EI)/((EII) + (EIII)) \leq 1.05$ wherein (EIII) is the hydroxyl equivalent of the polyol (III) comprising the copolymerized polycarbonate diol (IIIA), (EI) is the isocyanate equivalent of the isocyanate compound (I) comprising an aliphatic isocyanate compound and/or an alicyclic isocyanate compound, and (EII) is the hydroxyl equivalent of the chain extender (II).
As already mentioned, if the value of this equivalent ratio is less than 0.95, the thermoplastic polyurethane resin elastomer that is obtained has insufficient properties such as chemical resistance and heat resistance. If this equivalent ratio exceeds 1.05, the thermoplastic polyurethane resin elastomer that is obtained is partially crosslinked and has an increased proportion of unreacted isocyanate groups being converted to amino groups by the reaction with water in the air, and consequently may suffer deterioration in shaping properties, may form a large number of fisheyes stemming from gelation, may be yellowed easily, and may exhibit insufficient mechanical strength such as elongation. The lower limit of the equivalent ratio is preferably not less than 0.97, and more preferably not less than 0.99. The upper limit of the equivalent ratio is preferably not more than 1.04, and more preferably not more than 1.03.
In any of the production methods described above, the urethane-forming reaction for producing the thermoplastic polyurethane resin elastomer of the present invention is preferably performed while ensuring that the polyol (III) comprising the copolymerized polycarbonate diol (IIIA), the isocyanate compound (I) comprising an aliphatic isocyanate compound and/or an alicyclic isocyanate compound, and the chain extender (II) are reacted in an equivalent ratio represented by hydroxyl equivalent (EIII) of polyol (III):isocyanate equivalent (EI) of isocyanate compound (I):hydroxyl equivalent (EII) of aliphatic alcohol (II) of 1:2-6:1-5.
If the isocyanate equivalent (EI) of the isocyanate compound (I) is less than 2 relative to the hydroxyl equivalent

(EIII) of the polyol (III) being 1, the thermoplastic polyurethane resin elastomer has insufficient mechanical strength and low breaking strength, or exhibits low elastic characteristics or insufficient heat resistance. If the isocyanate equivalent (EI) of the isocyanate compound (I) exceeds 6, the thermoplastic polyurethane resin elastomer has insufficient mechanical strength and low breaking elongation, or has an excessively high elastic modulus to show low elastic characteristics and also insufficient flexibility.

When the hydroxyl equivalent (EIII) of the polyol (III) is 1, the isocyanate equivalent (EI) of the isocyanate compound (I) is preferably 2.5 to 5.5 from the point of view of the balance between various properties and various durability properties, and is more preferably 3.0 to 5.0, and most preferably 3.0 to 4.5.

The thermoplastic polyurethane resin elastomer exhibits insufficient strength if the hydroxyl equivalent (EII) of the aliphatic alcohol (II) is less than 1 relative to the hydroxyl equivalent (EIII) of the polyol (III) being 1, and has insufficient flexibility if the hydroxyl equivalent of the aliphatic alcohol exceeds 5.

When the hydroxyl equivalent (EIII) of the polyol (III) is 1, the hydroxyl equivalent (EII) of the aliphatic alcohol (II) is preferably 1.5 to 4.5 from the point of view of the balance between strength and flexibility, and is more preferably 2.0 to 4.0, and most preferably 2.0 to 3.5.

[Additives]

The thermoplastic polyurethane resin elastomer of the present invention may form a composition by being compounded with one, or two or more additives selected from the group consisting of stabilizers including hindered phenolic antioxidants, UV absorbers and light stabilizers (HALS), and lubricants. Such a composition advantageously attains enhanced resin stability. Depending on use applications, other additives such as internal mold release agents, external mold release agents, fillers, plasticizers, colorants (dyes, pigments), flame retardants, crosslinking agents, reaction accelerators and reinforcing agents may be added and mixed with the elastomer to form a thermoplastic polyurethane resin elastomer composition as long as the characteristics of the thermoplastic polyurethane resin elastomer of the present invention are not impaired.

Examples of the internal mold release agents include fatty acid amides, fatty acid esters, fatty acids, fatty acid salts and silicone oils. Examples of the fatty acid amides include capramide, lauramide, myristamide, stearamide, oleamide, ethylenebisstearamide and ethylenebisoleamide. Examples of the fatty acid esters include esters of a long-chain fatty acid and an alcohol, with specific examples including sorbitan monolaurate, butyl stearate, butyl laurate, octyl palmitate and stearyl stearate. Examples of the fatty acids include capric acid, lauric acid, myristic acid, palmitic acid, stearic acid, montanic acid, lindenic acid, oleic acid, erucic acid and linoleic acid. Examples of the fatty acid salts include salts of the above fatty acids with metals (such as, for example, barium, zinc, magnesium and calcium).

Examples of the fillers include talc, calcium carbonate, chalk, calcium sulfate, clay, kaolin, silica, glass, fumed silica, mica, wollastonite, feldspar, aluminum silicate, calcium silicate, alumina, alumina hydrates such as alumina trihydrate, glass microspheres, ceramic microspheres, thermoplastic resin microspheres, barite, wood powder, glass fibers, carbon fibers, marble dust, cement dust, magnesium oxide, magnesium hydroxide, antimony oxide, zinc oxide, barium sulfate, titanium dioxide, titanate salts, and combinations thereof. Preferred fillers are talc, calcium carbonate, barium sulfate, silica, glass, glass fibers, alumina, titanium dioxide, and combinations thereof. More preferred fillers are talc, calcium carbonate, barium sulfate, glass fibers, and combinations thereof. As the fillers, those described in "Plastics Additives Handbook" by Zweifel Hans et al., Hanser Gardner Publications, Cincinnati, Ohio, 5th Edition, Chapter 17, pp. 901-948 (2001) may be used.

Examples of the plasticizers include mineral oils, abietic acid esters, adipic acid esters, alkylsulfonic acid esters, azelaic acid esters, benzoic acid esters, chlorinated paraffins, citric acid esters, epoxides, glycol ethers and esters thereof, glutaric acid esters, hydrocarbon oils, isobutyric acid esters, oleic acid esters, pentaerythritol derivatives, phosphoric acid esters, phthalic acid esters, polybutenes, ricinolic acid esters, sebacic acid esters, sulfonamides, trimellitic acid esters, pyromellitic acid esters, biphenyl derivatives, stearic acid esters, difuran diesters, fluorine-containing plasticizers, hydroxybenzoic acid esters, isocyanic acid ester adducts, polycyclic aromatic compounds, natural product derivatives, siloxane plasticizers, tar products, thioesters, thioethers, and combinations thereof. The content of the plasticizer in the thermoplastic polyurethane resin elastomer composition is preferably 0 to 15 mass%, more preferably 0.5 to 10 mass%, and still more preferably 1 to 5 mass%. As the plasticizers, those described in "Handbook of Plasticizers" by George Wypych, ChemTec Publishing, Toronto-Scarborough, Ontario (2004) may be used.

Examples of the colorants (dyes, pigments) include inorganic pigments such as, for example, metal oxides (for example, iron oxide, zinc oxide and titanium dioxide), mixed metal oxides, carbon blacks, and combinations thereof; organic pigments such as, for example, anthraquinones, anthanthrones, azo compounds, monoazo compounds, arylamides, benzimidazolones, BONA lakes, diketopyrrolopyrroles, dioxazines, disazo compounds, diarylide compounds, flavanthrones, indanthrones, isoindolinones, isoindolines, monoazo salts, naphthols, β-naphthols, naphthols AS, naphthol lakes, perylenes, perinones, phthalocyanines, pyranthrones, quinacridones, quinophthalones, and combinations thereof; and combinations of inorganic pigments and organic pigments. The content of the colorant in the thermoplastic

polyurethane resin elastomer composition is preferably 0 to 10 mass%, more preferably 0.1 to 5 mass%, and still more preferably 0.25 to 2 mass%. As the colorants, those described in "Plastics Additives Handbook" by Zweifel Hans et al., Hanser Gardner Publications, Cincinnati, Ohio, 5th Edition, Chapter 15, pp. 813-882 (2001) may be used.

Examples of the antioxidants include aromatic amines and hindered amines such as alkyldiphenylamines, phenyl-α-naphthylamine, alkyl-substituted phenyl-α-naphthylamines, aralkyl-substituted phenyl-α-naphthylamines, alkylated p-phenylenediamines and tetramethyl-diaminodiphenylamine; phenolic compounds such as 2,6-di-t-butyl-4-methylphenol; 1,3,5-trimethyl-2,4,6-tris(3',5'-di-t-butyl-4'-hydroxybenzyl)benzene; tetrakis[(methylene(3,5-di-t-butyl-4-hydroxyhydrocinnamato)]methane (for example, IRGANOX (trademark) 1010, manufactured by Ciba Specialty Chemicals); acryloyl-modified phenols; octadecyl-3,5-di-t-butyl-4-hydroxycinnamate (for example, IRGANOX (trademark) 1076, manufactured by Ciba Specialty Chemicals); phosphorous acid esters; phosphonous acid esters; hydroxylamines; benzofuranone derivatives; and combinations thereof. The content of the antioxidant in the thermoplastic polyurethane resin elastomer composition is preferably 0 to 5 mass%, more preferably 0.0001 to 2.5 mass%, still more preferably 0.001 to 1 mass%, and particularly preferably 0.001 to 0.5 mass%. As the antioxidants, those described in "Plastics Additives Handbook" by Zweifel Hans et al., Hanser Gardner Publications, Cincinnati, Ohio, 5th Edition, Chapter 1, pp. 1-140 (2001) may be used.

Examples of the UV stabilizers include benzophenones, benzotriazoles, aryl esters, oxanilides, acrylic acid esters, formamidines, carbon blacks, hindered amines, nickel quenchers, hindered amines, phenolic compounds, metal salts, zinc compounds, and combinations thereof. The content of the UV stabilizer in the thermoplastic polyurethane resin elastomer composition is preferably 0 to 5 mass%, more preferably 0.01 to 3 mass%, still more preferably 0.1 to 2 mass%, and particularly preferably 0.1 to 1 mass%. As the UV stabilizers, those described in "Plastics Additives Handbook" by Zweifel Hans et al., Hanser Gardner Publications, Cincinnati, Ohio, 5th Edition, Chapter 2, pp. 141-426 (2001) may be used.

Examples of the heat stabilizers include phosphorus heat stabilizers. Examples of the commercial products thereof include IRGAPHOS series 38, 126 and P-EPQ (trade names) manufactured by Ciba Specialty Chemicals, and ADK STAB series PEP-4C, 11C, 24 and 36 (trade names) manufactured by ADEKA CORPORATION. When a phosphorus heat stabilizer is used, the content of the heat stabilizer in the thermoplastic polyurethane resin elastomer composition is preferably 0.05 to 1 mass%.

Examples of the flame retardants include halogenated organic flame retardants such as polybromodiphenyl ethers, ethylene bisbromophthalimide, bis(bromophenyl)ethane, bis(bromophenyl)terephthalamide and perchloropentacyclodecane; phosphorus organic flame retardants; nitrogen organic flame retardants; and inorganic flame retardants such as antimony trioxide, aluminum hydroxide and magnesium hydroxide.

Examples of the crosslinking agents include organic peroxides such as alkyl peroxides, aryl peroxides, peroxyesters, peroxycarbonates, diacyl peroxides, peroxyketals and cyclic peroxides; silane compounds such as vinyltrimethoxysilane, vinyltriethoxysilane, vinyltris(2-methoxyethoxy)silane, vinyltriacetoxysilane, vinylmethyldimethoxysilane and 3-methacryloyloxypropyltrimethoxysilane; and radical crosslinking agents having a plurality of (preferably three or more) carbon-carbon double bonds in the molecule, such as trimethylolpropane triacrylate, trimethylolpropane trimethacrylate and triacrylformal. As the crosslinking agents, those described in "Plastics Additives Handbook" by Zweifel Hans et al., Hanser Gardner Publications, Cincinnati, Ohio, 5th Edition, Chapter 14, pp. 725-812 (2001) may be used. In particular, radical crosslinking agents are preferable. Trimethylolpropane triacrylate, trimethylolpropane trimethacrylate and triacrylformal are more preferable. Trimethylolpropane triacrylate and trimethylolpropane trimethacrylate are still more preferable.

These additives may be used singly, or two or more kinds may be used in any combination and in any ratio.

The amount in which the additives are added is such that the lower limit of the mass ratio to the thermoplastic polyurethane resin elastomer of the present invention is preferably 0.01 mass%, more preferably 0.05 mass%, and still more preferably 0.1 mass%, and the upper limit thereof is preferably 10 mass%, more preferably 5 mass%, and still more preferably 1 mass%. The additives do not offer sufficient effects when added in an excessively small amount. When added in an excessively large amount, the additives may be precipitated or cause turbidity during the course of processing of a film or a shaped article using the thermoplastic polyurethane resin elastomer.

The thermoplastic polyurethane resin elastomer of the present invention may be compounded with other thermoplastic polyurethane resin elastomers and other thermoplastic elastomers such as vinyl chloride elastomers, styrene elastomers, polyolefin elastomers, polydiolefin elastomers, polyester elastomers, amide elastomers and silicon elastomers.

[Use applications]

The thermoplastic polyurethane resin elastomer of the present invention has special mechanical characteristics, specifically, shows a wide change in elastic modulus depending on temperature and has excellent stress relaxation properties, and at the same time has various excellent durability properties such as weather resistance and chemical

resistance at the same time. Thus, the thermoplastic polyurethane resin elastomer may be used in various applications where these characteristics are required.

A shaped article having the characteristics described above may be obtained by shaping the thermoplastic polyurethane resin elastomer or the thermoplastic polyurethane resin elastomer composition according to the present invention.

The thermoplastic polyurethane resin elastomer or the thermoplastic polyurethane resin elastomer composition according to the present invention may be shaped by any method without limitation. Various shaping methods generally used for thermoplastic polymers may be used. For example, any shaping methods such as injection molding, extrusion, press molding, blow molding, calendering, casting and roll processing may be adopted to produce articles having various shapes such as resin plates, films, sheets, tubes, hoses, belts, rolls, synthetic leathers, shoe soles, automobile parts, escalator handrails, road sign members and fibers.

More specifically, for example, the thermoplastic polyurethane resin elastomer of the present invention may be used in tubes and hoses in devices used in the food and medical fields such as pneumatic devices, coating devices, analytical devices, laboratory devices, metering pumps, water treatment devices and industrial robots, and also in spiral tubes and fire hoses. Further, the elastomer may be used as belts such as round belts, V-belts and flat belts in machinery such as various transmission mechanisms, spinning machines, packing machines and printing machines. Furthermore, the elastomer may be used in, for example, heel tops and soles of footwear, equipment parts such as couplings, packings, pole joints, bushes, gears and rolls, sporting goods, leisure goods and watch belts. Further, the elastomer may be used as automobile parts such as oil stoppers, gearboxes, spacers, chassis parts, interior parts and tire chain substitutes. Furthermore, the elastomer may be used as, for example, films such as keyboard films and automobile films, curl cords, cable sheaths, bellows, conveying belts, flexible containers, binders, synthetic leathers, dipping products and adhesives.

A shaped article of the thermoplastic polyurethane resin elastomer or the thermoplastic polyurethane resin elastomer composition according to the present invention may be a 30 μm to 2 mm thick film article such as a film or a sheet. Such a film article is suited as, for example, a synthetic leather sheet for automobiles, a paint protective film for automobile exteriors, and a decorative film for exteriors and interiors. A paint protective film for automobile exteriors is stretched manually to an appropriate extent when applied. Thus, the film cannot be applied well in some cases if the stress relaxation properties are not appropriately high (if the stress retention rate is not appropriately low). The film article is easy to handle with high tension and strength at room temperature, but becomes soft when heated slightly to offer excellent properties such as workability. Thus, the film article is suited for outdoor applications where the working temperature is sometimes as high as about 40°C. Further, a synthetic leather sheet for automobiles, a paint protective film for automobile exteriors, and a decorative film for exteriors and interiors are stretched to an appropriate extent when they are shaped or attached, and thus the possession of the above characteristics is advantageous.

The thermoplastic polyurethane resin elastomer or the thermoplastic polyurethane resin elastomer composition according to the present invention may be suitably extruded into a medical catheter or tube. Since all the human blood vessels are subtly different from one another, the ability to relax the stress after placement in the body and to keep to the shape of the blood vessel reduces the load on the human body. Further, such a medical catheter or tube is easy to handle with appropriate strength at room temperature of 23°C, but lowers its elastic modulus and becomes soft near the temperature of the body (36 to 40°C) in which it is placed. Catheters or tubes having such properties have been awaited. Further, a catheter or tube using the thermoplastic polyurethane resin elastomer of the present invention is very useful because of having high biodurability and also excellent biocompatibility.

The thermoplastic polyurethane resin elastomer or the thermoplastic polyurethane resin elastomer composition according to the present invention may be injection molded to form an outer resin for protective masks that is placed into contact with the human face. Such an outer resin is suited for influenza virus masks and new coronavirus masks. The outer resin of such a mask needs to be in close contact with the face. The resin of the present invention, which is flexible near the body temperature and has excellent stress relaxation properties, ensures intimate contact and is highly chemically resistant to oleic acid that is a sweat component and to ethanol in disinfectants, thereby attaining excellent durability.

The thermoplastic polyurethane resin elastomer or the thermoplastic polyurethane resin elastomer composition according to the present invention may be melt-spun into polyurethane elastic fibers. Such fibers have appropriate flexibility and excellent weather resistance and chemical resistance, and advantageously solve the problem of durability such as weather resistance and chemical resistance that is the drawback of the currently marketed spandex fibers.

The thermoplastic polyurethane resin elastomer or the thermoplastic polyurethane resin elastomer composition according to the present invention is suitably used in soles of footgear such as sports shoes. Such shoe soles have low resilience and reduces the fatigue due to the balance between stress relaxation properties and elasticity.

The thermoplastic polyurethane resin elastomer or the thermoplastic polyurethane resin elastomer composition of the present invention may be suitably injection molded into a protective cover for electronic devices such as smartphones, tablets and mobile phones. Such a protective cover has excellent transparency and high resistance to oleic acid that is a sweat component.

Further, the thermoplastic polyurethane resin elastomer or the thermoplastic polyurethane resin elastomer composition according to the present invention may be used in a thermoplastic polyurethane film or a laminate film including such a thermoplastic polyurethane film. Such a film may be used as, for example, a paint protection film (PPF) for protecting the painted surface of automobiles, ships and aircraft, a marking film used for automobile surfaces and building materials, or a decorative film used for various resins, metals and glass surfaces.

EXAMPLES

The present invention will be described in more detail hereinbelow by presenting EXAMPLES and COMPARATIVE EXAMPLES. The present invention is not limited to these EXAMPLES and may be modified without departing from the spirit of the present invention.

[Evaluation methods]

The following evaluation methods were adopted in EXAMPLES and COMPARATIVE EXAMPLES below.

[Methods for evaluating polycarbonate diols]

<Hydroxyl value and number average molecular weight>

The hydroxyl value of a polycarbonate diol was measured using an acetylation reagent by a method in accordance with JIS K1557-1. Further, the number average molecular weight was determined from the hydroxyl value using the following equation (1).

$$\text{Number average molecular weight} = 2 \times 56.1/(\text{hydroxyl value} \times 10^{-3}) \quad ...(1)$$

<Molar ratio of repeating units (B) to repeating units (A)>

A polycarbonate diol was dissolved into $CDCl_3$, and a $^1H$-NMR spectrum was measured at 400 MHz (AL-400 manufactured by JEOL Ltd.). From the positions of the signals of the respective components, the molar ratio (B)/(A) of repeating units (B) to repeating units (A) was determined.

<Phenol content>

A polycarbonate diol was dissolved into $CDCl_3$, and a $^1H$-NMR spectrum was measured at 400 MHz (AVANCE 400 manufactured by BRUKER). The content of phenols was calculated from the integrals of the signals of the respective components. Here, the detection limit is 100 ppm in terms of the weight of phenol.

<Magnesium content>

Approximately 0.1 g of a polycarbonate diol was weighed out and was dissolved into 4 mL of acetonitrile. Thereafter, 20 mL of pure water was added to precipitate the polycarbonate diol. The polycarbonate diol precipitated was removed by filtration. The solution after the filtration was diluted with pure water to a predetermined concentration, and the metal ion concentration was analyzed by ion chromatography. The metal ion concentration in acetonitrile used as the solvent was measured as the blank value, and the metal ion concentration in the polycarbonate diol after subtraction of the metal ion concentration in the solvent was determined. The measurement conditions are described in Table 1 below. The magnesium ion concentration was determined using the analysis results and a calibration curve prepared beforehand.

[Table 1]

| Metal ion concentration measurement conditions | |
|---|---|
| | Cation |
| Analyzers | "DX-320" Nippon Dionex K.K. Chromatopac: "C-R7A" Shimadzu Corporation |

(continued)

| | Cation |
|---|---|
| Separation column | IonPac CS12A |
| Guard column | IonPac CG12A |
| Flow rate | 1.0 mL/min |
| Injection volume | 1.5 mL |
| Pressure | 960-990 psi |
| OVEN TEMP | 35°C |
| Detector sensitivity | RANGE 200 μS |
| Suppressor | CSRS Current value: 60 mA |
| Eluent | 20 mmol/L Methanesulfonic acid |
| Retention time | Mg: 10.9 min<br>Ca: 13.0 min<br>Ba: 19.4 min |

[Methods for evaluating thermoplastic polyurethane resin elastomer films and thermoplastic polyurethane resin elastomers]

<Molecular weight of thermoplastic polyurethane resin elastomers>

A thermoplastic polyurethane resin elastomer film was dissolved into dimethylacetamide, and the concentration of the dimethylacetamide solution was adjusted to 0.14 mass%. The dimethylacetamide solution was injected into a GPC device [product name: "HLC-8220" manufactured by TOSOH CORPORATION (columns: two TskgelGMH-XL columns)], and the weight average molecular weight (Mw) and the number average molecular weight (Mn) of the thermoplastic polyurethane resin elastomer were measured using standard polystyrenes. The molecular weight distribution (Mw/Mn) was then calculated.

<Melt viscosity>

The melt mass flow rate (MFR) was measured with a melt mass flow rate measuring device (device name: Melt Indexer, manufactured by TATEYAMA KAGAKU CO., LTD.) under a load of 2.16 kg in accordance with JIS 7210 (ISO 1133). The melt viscosity was measured under the condition of 190°C.

<Hardness>

The hardness was measured with respect to pellets of a thermoplastic polyurethane resin elastomer. A fluororesin sheet and a melt-forming mold were installed in this order onto a plate of a hot press machine (product name: "MINI TEST PRESS", manufactured by Toyo Seiki Seisaku-sho, Ltd.). The melt-forming mold that was used was 4 cm × 4 cm × 2 mm in thickness. The pellets were placed into the mold and were covered with a fluororesin sheet on top thereof. The thermoplastic polyurethane resin elastomer was melted using the plate of the hot press machine (pressure: 1 MPa × temperature: 180°C × time: 5 minutes). After melting, the pressure setting of the hot press machine was gradually increased, and the elastomer was heated and shaped at a maximum pressure of 10 MPa for 5 minutes. Thereafter, the pressure of the hot press machine was lowered, and the mold was taken out and was installed into a cooling press machine (product name: "MINI TEST PRESS", manufactured by Toyo Seiki Seisaku-sho, Ltd.) and rapidly cooled (pressure: 10 MPa × time: 2 minutes). Thus, a sheet of the thermoplastic polyurethane resin elastomer that was 4 cm × 4 cm × 2 cm in thickness was obtained. In accordance with JIS K6253 (2012), three sheets of the thermoplastic polyurethane resin elastomer each having a thickness of 2 mm were stacked on top of one another to give a specimen having a thickness of 6 mm. Using a rubber hardness meter [model number: "GS-719N (A-TYPE)" manufactured by TEFLOCK Co., Ltd.], the pressure plate of the rubber hardness meter was brought into contact with the specimen, and the measurement value after 10 seconds [Shore A hardness] was read. The measurement was performed at five contact points separated from one another by at least 6 mm, and the results were averaged.

<Hue (YI)>

A thermoplastic polyurethane resin elastomer film was irradiated with a 12 V, 20 W halogen lamp as a light source for 5 seconds. The reflected light was detected with colorimeter ZE-6000 (manufactured by NIPPON DENSHOKU INDUSTRIES Co., Ltd.). The YI was measured under the conditions of D65 light source and 2 degrees field of view based on JIS K7373.

<Appearance (transparency)>

To evaluate the transparency of the above sheet of the thermoplastic polyurethane resin elastomer (the melt-formed sheet sample 4 cm × 4 cm × 2 mm in thickness), three evaluators tried to read letters behind the sheet visually through the sheet. The transparency was rated as 1 when the sheet was transparent and the letters were clearly visible; rated as 2 when the sheet was cloudy and the letters were not clearly visible; and rated as 3 when the sheet was white and the letters were almost invisible. The final rating was determined by a majority vote by the three evaluators. The transparency is excellent when rated as 1, but is opaque and does not offer a satisfactory appearance when rated as 2 or 3.

<Tensile test>

In accordance with JIS K6301 (2010), a strip specimen 10 mm in width, 100 mm in length and about 50 μm in thickness was cut out from a film of a thermoplastic polyurethane resin elastomer and was tensile tested on a tensile tester (product name: "Tensilon UTM-III-100", manufactured by Orientec Co., Ltd.) from a chuck distance of 50 mm at a stress rate of 500 mm/min, a temperature of 23°C or 40°C and a relative humidity of 55% to determine the stress at 100% elongation, 100% modulus, of the specimen. The percentage ratio of the 100% modulus measured at 40°C (40°C (100% M)) to the 100% modulus measured at 23°C (23°C 100% M)) was determined by calculating 40°C (100% M)/23°C (100% M). The lower the value, the higher the flexibility when heated at a low temperature and the more the stretchability is enhanced. The value is preferably not more than 70%, more preferably not more than 65%, and still more preferably not more than 60%.

Further, the specimen at 100% elongation (2.0 times as long as the original length) under the room-temperature tensile conditions at 23°C was placed at rest for 10 minutes after the discontinuation of stretching. The ratio of the load (the residual stress) was determined as the stress retention rate. The value is preferably not more than 50%, and more preferably not more than 40%.

<Oleic acid resistance>

A 3 cm × 3 cm specimen was cut out from a thermoplastic polyurethane resin elastomer film. The mass of the specimen was measured with a precision balance. The specimen was then added to a 250 ml volume glass bottle containing 50 ml of oleic acid as a test solvent, and was allowed to stand in a nitrogen atmosphere in a thermostatic chamber at 80°C for 16 hours. After the test, the specimen was taken out, the front and back sides were lightly wiped with a paper wiper, and the mass was measured with the precision balance to calculate the mass change (the rate of increase) from the mass before the test. The closer the mass change is to 0%, the higher the oleic acid resistance.

<Ethanol resistance>

A 3 cm × 3 cm specimen was cut out from a thermoplastic polyurethane resin elastomer film. The mass of the specimen was measured with a precision balance. The specimen was then added to a glass petri dish 10 cm in inner diameter ϕ containing 50 ml of ethanol as a test solvent, and was kept immersed therein for 1 hour at room temperature of about 23°C. After the test, the specimen was taken out and was lightly wiped with a paper wiper, and the mass was measured with the precision balance to calculate the mass change (the rate of increase) from the mass before the test. The closer the mass change is to 0%, the higher the ethanol resistance.

[Production and evaluation of polycarbonate diols]

[SYNTHESIS EXAMPLE 1]

A 5 L glass separable flask equipped with a stirrer, a distillate trap and a pressure regulator was charged with 1,4-butanediol (hereinafter, sometimes written as "1,4BD"): 1050.2 g, neopentyl glycol (hereinafter, sometimes written as "NPG"): 214.2 g, diphenyl carbonate (hereinafter, sometimes written as "DPC"): 2735.7 g, and an aqueous magnesium acetate tetrahydrate solution: 7.0 mL (concentration: 8.4 g/L, magnesium acetate tetrahydrate: 59 mg) and was purged

with nitrogen gas. While performing stirring, the internal temperature was raised to 160°C to heat and dissolve the contents. Thereafter, the pressure was lowered to 24 kPa in 2 minutes, and the reaction was performed for 90 minutes while removing phenols out of the system. Next, the reaction was continued while lowering the pressure to 9.3 kPa in 90 minutes and further lowering the pressure to 0.7 kPa in 30 minutes. Thereafter, the temperature was raised to 170°C and the reaction was carried out for 60 minutes while removing phenols and the unreacted dihydroxy compounds out of the system, thereby preparing a polycarbonate diol-containing composition. Thereafter, a 0.85 mass% aqueous phosphoric acid solution: 2.7 mL was added to deactivate magnesium acetate. A polycarbonate diol-containing composition was thus obtained.

The polycarbonate diol-containing composition obtained was feed to a thin-film distillation apparatus at a flow rate of about 20 g/min to perform thin-film distillation (temperature: 170°C, pressure: 53 to 67 Pa). The thin-film distillation apparatus used was molecular distillation apparatus MS-300 from SIBATA SCIENTIFIC TECHNOLOGY LTD. equipped with a jacket and an internal condenser 50 mm in diameter, 200 mm in height and 0.0314 $m^2$ in area.

The content of phenols in the polycarbonate diol obtained by thin-film distillation was not more than 100 mass ppm. The magnesium content was not more than 100 mass ppm.

The polycarbonate diol produced in SYNTHESIS EXAMPLE 1 is written as "PCD1".

Table 2 describes the results of evaluation of the chemical properties of PCD1.

[SYNTHESIS EXAMPLE 2]

A 5 L glass separable flask equipped with a stirrer, a distillate trap and a pressure regulator was charged with 1,4-butanediol (hereinafter, sometimes written as "1,4BD"): 836.2 g, neopentyl glycol (hereinafter, sometimes written as "NPG"): 520.3 g, diphenyl carbonate (hereinafter, sometimes written as "DPC"): 2843.5 g, and an aqueous magnesium acetate tetrahydrate solution: 7.3 mL (concentration: 8.4 g/L, magnesium acetate tetrahydrate: 61 mg) and was purged with nitrogen gas. While performing stirring, the internal temperature was raised to 160°C to heat and dissolve the contents. Thereafter, the pressure was lowered to 24 kPa in 2 minutes, and the reaction was performed for 90 minutes while removing phenols out of the system. Next, the reaction was continued while lowering the pressure to 9.3 kPa in 90 minutes and further lowering the pressure to 0.7 kPa in 30 minutes. Thereafter, the temperature was raised to 170°C and the reaction was carried out for 60 minutes while removing phenols and the unreacted dihydroxy compounds out of the system, thereby preparing a polycarbonate diol-containing composition. Thereafter, a 0.85 mass% aqueous phosphoric acid solution: 2.8 mL was added to deactivate magnesium acetate. A polycarbonate diol-containing composition was thus obtained.

The polycarbonate diol-containing composition obtained was sent to a thin-film distillation apparatus at a flow rate of about 20 g/min to perform thin-film distillation (temperature: 170°C, pressure: 53 to 67 Pa). The thin-film distillation apparatus used was molecular distillation apparatus MS-300 from SIBATA SCIENTIFIC TECHNOLOGY LTD. equipped with a jacket and an internal condenser 50 mm in diameter, 200 mm in height and 0.0314 $m^2$ in area.

The content of phenols (measured by the method described above) in the polycarbonate diol obtained by thin-film distillation was not more than 100 mass ppm. The magnesium content was not more than 100 mass ppm.

The polycarbonate diol produced in SYNTHESIS EXAMPLE 2 is written as "PCD2".

Table 2 describes the results of evaluation of the chemical properties of PCD2.

[Table 2]

| | PCD1 | PCD2 |
|---|---|---|
| Molar ratio (B)/(A) | 0.18 | 0.43 |
| Hydroxyl value (mg-KOH/g) | 56.1 | 56.1 |
| Number average molecular weight (Mn) | 2000 | 2000 |

[Commercial polyol]

A polycaprolactone produced from ε-caprolactone as a raw material ("PLACCEL (registered trademark)", grade: PCL220, number average molecular weight (Mn): 2000, manufactured by Daicel Corporation) was used as a polyol for COMPARATIVE EXAMPLE. This polycaprolactone is written as "PCL".

[Production and evaluation of thermoplastic polyurethane resin elastomer films]

[EXAMPLE 1]

PCD1, 4,4'-dicyclohexylmethane diisocyanate (hereinafter, sometimes written as "H12MDI") and 1,4-butanediol (hereinafter, sometimes written as "1,4BD") which had been each preheated to 80°C were placed into a storage tank of an extruder equipped with a stirrer so that the ratio represented by hydroxyl equivalent (EIII) of PCD1:isocyanate equivalent (EI) of H12MDI:hydroxyl equivalent (EII) of 1,4BD would be 1.00:2.99:2.00 ((EI)/((EII) + (EIII)) = 0.995). Further, NEOSTANN U-830 (hereinafter, U-830, manufactured by NITTO KASEI CO., LTD.) as a urethane-forming catalyst was added in an amount of 2 weight ppm relative to the total weight of PCD1 and H12MDI. Next, all the components were rapidly mixed together with a mixer at a rotational speed of 2000 rpm, and the mixture was continuously supplied through a metering pump into a coaxial twin-screw extruder while controlling the in-machine polymerization temperature in the range of 160°C to 210°C. During this process, the rotational speed was controlled to 250 rpm, and the residence time in the extruder was controlled to 1 minute to 3 minutes. The strands continuously extruded at the die outlet were cooled in water and were cut with a pelletizer. The pellets were then dried at 100°C for 24 hours.

Using a short-screw extruder equipped with a 50 mmdiameter inflation die, the pellets of the thermoplastic polyurethane resin elastomer thus obtained were continuously formed into a 150 μm thick film at both a cylinder temperature and a die temperature of 200°C. The film takeup speed in this process was 6 m/min.

The thermoplastic polyurethane resin elastomer film obtained was evaluated as described hereinabove, the results being described in Table 3.

[EXAMPLES 2 and 3, and COMPARATIVE EXAMPLE 1]

Thermoplastic polyurethane resin elastomer films were obtained and evaluated in the same manner as in EXAMPLE 1, except that the raw materials that were used were changed as described in Table 3. The evaluation results are shown in Table 3.

[Table 3]

| | | | EX. 1 | EX. 2 | EX. 3 | COMP. EX. 1 |
|---|---|---|---|---|---|---|
| Molecular weight of polyol | | Mn | 2000 | 2000 | 2000 | 2000 |
| Type of polyol | | - | PCD1 | PCD2 | PCD2 | PCL |
| Type of isocyanate compound | | - | H12MDI | H12MDI | H12MDI | H12MDI |
| Type of chain extender | | - | 1,4BD | 1,4BD | 1,4BD | 1,4BD |
| Raw material equivalent ratio | H12MDI | (EI) | 2.99 | 2.99 | 2.99 | 4.98 |
| | 1,4BD | (EII) | 2.00 | 2.00 | 2.30 | 4.00 |
| | Polyol | (EIII) | 1.00 | 1.00 | 1.00 | 1.00 |
| | (EI)/((EII) + (EIII)) | | 0.995 | 0.995 | 0.995 | 0.995 |
| Molecular weight of thermoplastic polyurethane resin elastomer | | Mn | 67000 | 69000 | 65100 | 71000 |
| | | Mw | 127000 | 134000 | 126000 | 132500 |
| | | Mw/Mn | 1.9 | 1.9 | 1.9 | 1.9 |
| MFR | 190°C | g/10 min | 1.70 | 0.57 | 0.73 | - |
| Hardness | 2 mm × 3 sheets | Shore A | 94 | 93 | 92 | - |
| Hue (YI) | D65 light source, 2 degrees | - | 4.7 | 4.4 | 3.8 | - |
| Appearance (transparency) | Visual evaluation | - | 1 | 1 | 1 | - |

(continued)

| | | | EX. 1 | EX. 2 | EX. 3 | COMP. EX. 1 |
|---|---|---|---|---|---|---|
| Tensile test | 23°C | 100% M [MPa] | 3.6 | 4.2 | 5.1 | 7.2 |
| | | Stress retention rate [%] | 48.1 | 41.9 | 41.5 | 48.9 |
| | 40°C | 100% M [MPa] | 2.1 | 2.1 | 2.3 | 6.0 |
| | 40°C (100% M)/23°C (100% M) | | 58.7 | 50.0 | 45.1 | 84.1 |
| Chemical resistance | Oleic acid | Rate of weight increase [%] | 20.4 | 34.4 | 34.5 | 78.8 |
| | Ethanol | Rate of weight increase [%] | 15.6 | 26.6 | 29.3 | 29.0 |

The following can be seen from Table 3.

COMPARATIVE EXAMPLE 1 in which polycaprolactone was used as the polyol resulted in a high ratio of the 100% modulus measured at 40°C relative to the 100% modulus measured at 23°C, and thus failed to attain an enhancement in flexibility under low-temperature heating conditions. Further, the chemical resistance was also poor.

In contrast, the thermoplastic polyurethane resin elastomers in EXAMPLES 1 to 3 were produced by reacting a polyol that was a copolymerized polycarbonate diol (IIIA) having a repeating unit (A) and a repeating unit (B), an alicyclic isocyanate compound, and a chain extender in a predetermined ratio. These elastomers had a low ratio of the 100% modulus measured at 40°C relative to the 100% modulus measured at 23°C, thereby attaining an enhancement in flexibility under low-temperature heating conditions and excellent stretchability, and also showed high chemical resistance.

As demonstrated above, films of the thermoplastic polyurethane resin elastomers of the present invention may be applied for attaching film while exhibiting flexibility by being slightly heated, and thereby may significantly improve the application workability.

[EXAMPLE 4]

A separable flask equipped with a thermocouple and a stirrer was charged with 60.61 g of PCD1, 8.17 g of 1,4-BD, 235.41 g of dehydrated N,N-dimethylformamide and 370 mg of a urethane-forming catalyst (NEOSTANN U-830) which had been each preheated to 80°C. The separable flask was immersed in an oil bath preset at 55°C, and the inside of the separable flask was stirred at 60 rpm for about 1 hour while performing heating in a nitrogen atmosphere. After PCD1 had been dissolved into the solvent, 30.00 g of H12MDI was added. Thirty minutes after the increase in internal temperature due to the heat of reaction subsided and the temperature started to decrease, approximately 1 g additional portions of H12MDI were added. The addition of the additional H12MDI portions was repeated, and finally a total of 32.65 g of H12MDI was added. A polyurethane solution was thus obtained.

The polyurethane solution obtained was applied onto a fluororesin sheet (fluororesin tape NITOFLON 900, thickness: 0.1 mm, manufactured by NITTO DENKO CORPORATION) with a 500 μm applicator, and was dried sequentially at 50°C for 5 hours, 100°C for 0.5 hours, and, under vacuum conditions, at 100°C for 0.5 hours, and 80°C for 15 hours. A thermoplastic polyurethane resin elastomer film was thus obtained.

The thermoplastic polyurethane resin elastomer film obtained was evaluated as described hereinabove, the results being described in Table 4.

[EXAMPLE 5, and COMPARATIVE EXAMPLES 2 and 3]

Thermoplastic polyurethane resin elastomer films were obtained and evaluated in the same manner as in EXAMPLE 4, except that the raw materials that were used were changed as described in Table 4. The evaluation results are shown in Table 4.

MPD/HD-PCD used as the polyol in COMPARATIVE EXAMPLE 2 is a copolymerized polycarbonate diol obtained using 3-methyl-1,5-pentanediol and 1,6-hexanediol as raw material diols.

In Table 4, HDI is hexamethylene diisocyanate and MDI is diphenylmethane diisocyanate.

[Table 4]

| | | | EX. 4 | EX. 5 | COMP. EX. 2 | COMP. EX. 3 |
|---|---|---|---|---|---|---|
| Molecular weight of polyol | | Mn | 2000 | 2000 | 2000 | 2000 |
| Type of polyol | | - | PCD2 | PCD2 | MPD/HD-PCD | PCD2 |
| Type of isocyanate compound | | - | H12MDI | H12MDI | HDI | MDI |
| Type of chain extender | | - | 1,4BD | 1,4BD | 1,4BD | 1,4BD |
| Raw material equivalent ratio | H12MDI | (EI) | 4.18 | 5.15 | 2.86 | 2.88 |
| | 1,4BD | (EII) | 3.00 | 4.00 | 2.00 | 2.00 |
| | Polyol | (EIII) | 1.00 | 1.00 | 1.00 | 1.00 |
| | (EI)/((EII) + (EIII)) | | 1.045 | 1.030 | 0.952 | 0.961 |
| Molecular weight of thermoplastic polyurethane resin elastomer | | Mw | 101609 | 105446 | 96775 | 146024 |
| | | Mn | 59150 | 61185 | 49302 | 72915 |
| | | Mw/Mn | 1.7 | 1.7 | 1.9 | 2.0 |
| Appearance (transparency) | | Visual evaluation | 1 | 1 | 2 | 1 |
| Tensile test | 23°C | 100% M [MPa] | 15.3 | 22.6 | 7.4 | 8.3 |
| | 40°C | 100% M [MPa] | 8.5 | 12.8 | 6.8 | 6.7 |
| | 40°C (100% M)/23°C (100% M) | | 55.6 | 56.6 | 90.9 | 80.9 |
| | 23°C | Stress retention rate [%] | 37.0 | 35.8 | 74.3 | 55.9 |
| Chemical resistance | Oleic acid | Rate of weight increase [%] | 28.5 | 36.0 | 11.7 | 1.5 |
| | Ethanol | Rate of weight increase [%] | 22.7 | 24 | 9.8 | 11.0 |

The following can be seen from Table 4.

COMPARATIVE EXAMPLE 2 which used a copolymerized PCD of 3-methyl-1,5-pentanediol and 1,6-hexanediol (MPD/HD-PCD) as the polyol and which also used hexamethylene diisocyanate (HDI) resulted in as high a stress retention rate as 74.3% and thus failed to attain stress relaxation properties required to ensure workability during film pasting application. Further, 40°C (100% M)/23°C (100% M) was as high as 90.9%. Thus, flexibility was not effectively imparted under low-temperature heating conditions, and the processability in film pasting application was poor. The thermoplastic polyurethane resin elastomer of COMPARATIVE EXAMPLE 3 included, similarly to EXAMPLES 4 to 6, PCD2 that was a copolymerized polycarbonate diol (IIIA) having a repeating unit (A) and a repeating unit (B), but the reaction involved diphenylmethane diisocyanate (MDI) that was an aromatic isocyanate compound. The stress retention rate was as high as 55.9%, and stress relaxation properties required to ensure workability during film application were not obtained. Further, 40°C (100% M)/23°C (100% M) was as high as 80.9%. Thus, flexibility was not effectively imparted under low-temperature heating conditions, and the processability in film application was poor.

In contrast, EXAMPLES 4 and 5 used PCD2 as the polyol that was a copolymerized polycarbonate diol (IIIA) having a repeating unit (A) and a repeating unit (B), and the thermoplastic polyurethane resin elastomers in these examples were produced by reacting the copolymerized polycarbonate diol (IIIA), the alicyclic isocyanate compound, and the chain extender in a predetermined ratio. These elastomers had a sufficiently low stress retention rate of about 36 to 37%. With a low stress retention rate, a laminate film for automobiles such as rear fenders may be applied while exhibiting intimate contact and followability to three-dimensional curved surfaces, and offers good film application workability and a beautiful finish.

In EXAMPLES 4 and 5, further, the ratio of the 100% modulus measured at 40°C to the 100% modulus measured at 23°C was sufficiently low. That is, it has been shown that the films attain enhanced flexibility by being heated at a low

temperature and thereby exhibit excellent stretchability, thus ensuring excellent workability during film application and also ensuring a good finish.

While the present invention has been described in detail with respect to some specific embodiments, the skilled person will appreciate that various modifications are possible within the spirit and scope of the invention.

This application is based upon Japanese Patent Applications Nos. 2019-083087 and 2019-083090 filed on April 24, 2019, the entire contents of which are incorporated herein by reference.

## Claims

1. A thermoplastic polyurethane resin elastomer obtained by reacting an isocyanate compound (I), an aliphatic alcohol (II) having only a hydroxyl group as a functional group and having a number average molecular weight determined from the hydroxyl value of less than 300, and a polyol (III) having a number average molecular weight determined from the hydroxyl value of not less than 300 and not more than 10,000, wherein

   the isocyanate compound (I) comprises not less than 90 mol% in total of an aliphatic isocyanate compound containing two isocyanate groups and/or an alicyclic isocyanate compound containing two isocyanate groups,
   the aliphatic alcohol (II) having only a hydroxyl group as a functional group and having a number average molecular weight determined from the hydroxyl value of less than 300 comprises not less than 90 mol% of a C12 or lower aliphatic diol,
   the polyol (III) comprises not less than 80 mol% of a copolymerized polycarbonate diol (IIIA) including a linear repeating structural unit represented by the formula (A) below (hereinafter, written as the "repeating unit (A)") and a repeating structural unit represented by the formula (B) below (hereinafter, written as the "repeating unit (B)"),
   the equivalent ratio represented by hydroxyl equivalent (EIII) of polyol (III):isocyanate equivalent (EI) of isocyanate compound (I):hydroxyl equivalent (EII) of aliphatic alcohol (II) is 1:2-6:1-5 (with the proviso that $0.95 \leq (EI)/((EII) + (EIII)) \leq 1.05$), and
   the number average molecular weight determined from the hydroxyl value of the copolymerized polycarbonate diol (IIIA) is not less than 500 and not more than 5,000,

   [Chem. 1]

   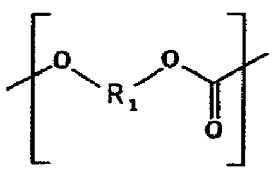 (A) 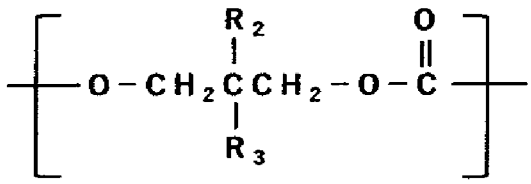 (B)

   wherein the formula (A) above represents a structural unit derived from a transesterification reaction product of a C2-C20 hydrocarbon diol having no side chain groups, and a carbonate ester, and
   the formula (B) above represents a structural unit derived from a transesterification reaction product of a 2-substituted 1,3-propanediol and a carbonate ester, in which $R_2$ denotes a C1-C4 aliphatic hydrocarbon group, $R_3$ denotes a C1-C4 aliphatic hydrocarbon group or a hydrogen atom, and $R_2$ and $R_3$ may be the same as or different from each other.

2. The thermoplastic polyurethane resin elastomer according to Claim 1, wherein the isocyanate compound (I) comprises not less than 80 mol% of an alicyclic isocyanate compound containing two isocyanate groups.

3. The thermoplastic polyurethane resin elastomer according to Claim 1 or 2, wherein the repeating unit (B) contained in the copolymerized carbonate polyol (IIIA) is such that $R_2$ is a methyl group and $R_3$ is a methyl group or a hydrogen atom.

4. The thermoplastic polyurethane resin elastomer according to any one of Claims 1 to 3, wherein the repeating unit (A) contained in the copolymerized carbonate polyol (IIIA) is derived from a transesterification reaction product of one or more of 1,3-propanediol, 1,4-butanediol, 1,5-pentanediol and 1,6-hexanediol with a carbonate ester.

5. The thermoplastic polyurethane resin elastomer according to any one of Claims 1 to 4, wherein the aliphatic isocyanate compound and/or the alicyclic isocyanate compound each containing two isocyanate groups in the molecule is one, or two or more selected from the group consisting of 1,6-hexamethylene diisocyanate, 4,4'-dicyclohexylmethane diisocyanate, 1,3-bis(isocyanatomethyl)cyclohexane, 1,5-pentamethylene diisocyanate and isophorone diisocyanate.

6. The thermoplastic polyurethane resin elastomer according to any one of Claims 1 to 5, wherein the aliphatic alcohol (II) is one, or two or more selected from the group consisting of ethylene glycol, 1,3-propanediol, 1,4-butanediol, 1,5-pentanediol and 1,6-hexanediol.

7. The thermoplastic polyurethane resin elastomer according to any one of Claims 1 to 6, wherein when the thermoplastic polyurethane resin elastomer is formed into a strip specimen in accordance with JIS K6301 (2010) having a width of 10 mm, a length of 100 mm and a thickness of about 50 μm, and when the specimen is tensile tested on a tensile tester (product name: "Tensilon UTM-III-100", manufactured by Orientec Co., Ltd.) from a chuck distance of 50 mm at a stress rate of 500 mm/min, temperatures of 23°C and 40°C and a relative humidity of 55% to determine the stress at 100% elongation (100% modulus), the strength ratio (by percentage) of the 100% modulus measured at 40°C to the 100% modulus measured at 23°C is not more than 70%, and the specimen has a stress retention rate of not more than 50% wherein the stress retention rate is the ratio of load (residual stress) after the specimen at 100% elongation (2.0 times as long as the original length) in the tensile test at 23°C is placed at rest for 10 minutes after discontinuation of stretching.

8. A method for producing a thermoplastic polyurethane resin elastomer comprising reacting an isocyanate compound (I), an aliphatic alcohol (II) having only a hydroxyl group as a functional group and having a number average molecular weight determined from the hydroxyl value of less than 300, and a polyol (III) having a number average molecular weight determined from the hydroxyl value of not less than 300 and not more than 10,000, wherein

the isocyanate compound (I) comprises not less than 90 mol% in total of an aliphatic isocyanate compound containing two isocyanate groups and/or an alicyclic isocyanate compound containing two isocyanate groups,
the aliphatic alcohol (II) having only a hydroxyl group as a functional group and having a number average molecular weight determined from the hydroxyl value of less than 300 comprises not less than 90 mol% of a C12 or lower aliphatic diol,
the polyol (III) comprises not less than 80 mol% of a copolymerized polycarbonate diol (IIIA) including a linear repeating structural unit represented by the formula (A) below (hereinafter, written as the "repeating unit (A)") and a repeating structural unit represented by the formula (B) below (hereinafter, written as the "repeating unit (B)"), and
the equivalent ratio of the hydroxyl equivalent (EIII) of the polyol (III), the isocyanate equivalent (EI) of the isocyanate compound (I) and the hydroxyl equivalent (EII) of the aliphatic alcohol (II) in the reaction is $0.95 \leq (EI)/((EII) + (EIII)) \leq 1.05$,

[Chem. 2]

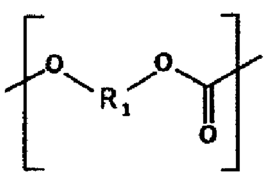 (A) 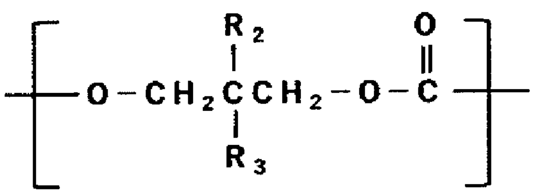 (B)

wherein the formula (A) above represents a structural unit derived from a transesterification reaction product of a C2-C20 hydrocarbon diol having no side chain groups, and a carbonate ester, and
the formula (B) above represents a structural unit derived from a transesterification reaction product of a 2-substituted 1,3-propanediol and a carbonate ester, in which $R_2$ denotes a C1-C4 aliphatic hydrocarbon group, $R_3$ denotes a C1-C4 aliphatic hydrocarbon group or a hydrogen atom, and $R_2$ and $R_3$ may be the same as or different from each other.

9. The method according to Claim 8 for producing a thermoplastic polyurethane resin elastomer, wherein the isocyanate compound (I), the aliphatic alcohol (II) and the polyol (III) are mixed with one another sufficiently by rapid stirring

without a solvent, and the mixture is supplied to a device in which the mixture is continuously mixed, reacted and extruded, thereby producing a thermoplastic polyurethane resin elastomer continuously.

**10.** A thermoplastic polyurethane resin elastomer composition comprising the thermoplastic polyurethane resin elastomer described in any one of Claims 1 to 7, and one, or two or more kinds of additives selected from the group consisting of hindered phenolic antioxidants, UV absorbers, light stabilizers and lubricants.

**11.** A thermoplastic polyurethane film article with a thickness of 30 μm to 2 mm obtained using the thermoplastic polyurethane resin elastomer described in any one of Claims 1 to 7 or the thermoplastic polyurethane resin elastomer composition described in Claim 10.

**12.** A paint protective film for automobile exteriors or a decorative film for interiors and exteriors obtained using the thermoplastic polyurethane resin elastomer film article described in Claim 11.

**13.** A medical catheter or tube obtained by extruding the thermoplastic polyurethane resin elastomer described in any one of Claims 1 to 7 or the thermoplastic polyurethane resin elastomer composition described in Claim 10.

**14.** A polyurethane elastic fiber obtained by melt-spinning the thermoplastic polyurethane resin elastomer described in any one of Claims 1 to 7 or the thermoplastic polyurethane resin elastomer composition described in Claim 10.

**15.** A low-resilience shoe sole comprising the thermoplastic polyurethane resin elastomer described in any one of Claims 1 to 7 or the thermoplastic polyurethane resin elastomer composition described in Claim 10.

**16.** An electronic device protective cover obtained by injection molding the thermoplastic polyurethane resin elastomer described in any one of Claims 1 to 7 or the thermoplastic polyurethane resin elastomer composition described in Claim 10.

**INTERNATIONAL SEARCH REPORT**

International application No. PCT/JP2020/017686

A. CLASSIFICATION OF SUBJECT MATTER
B32B 27/40(2006.01)i; C08L 75/04(2006.01)i; C08G 18/10(2006.01)i; C08G 18/32(2006.01)i; C08G 18/44(2006.01)i; C08G 18/65(2006.01)i; C08G 18/73(2006.01)i; C08G 18/75(2006.01)i; B29C 48/08(2019.01)i; B29C 48/10(2019.01)i
FI: C08G18/65 011; C08G18/44; C08G18/32 006; C08G18/75; C08G18/73; C08G18/10; C08L75/04; B32B27/40; B29C48/10; B29C48/08
According to International Patent Classification (IPC) or to both national classification and IPC

B. FIELDS SEARCHED
Minimum documentation searched (classification system followed by classification symbols)
B32B27/40; C08L75/04; C08G18/10; C08G18/32; C08G18/44; C08G18/65; C08G18/73; C08G18/75; B29C48/08; B29C48/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2017-128675 A (ASAHI KASEI CORPORATION) 27.07.2017 (2017-07-27) claims 1, 2, 4, 5, paragraphs [0068], [0069], [0071], [0090], examples 1-8, comparative examples 1-3, table 1, application examples 1-8, 12-19, comparative application examples 1-6, tables 2, 3 | 1-11<br>9, 12-16 |
| X<br>Y | WO 2014/104134 A1 (MITSUBISHI CHEMICAL CORP.) 03.07.2014 (2014-07-03) claim 9, paragraphs [0070]-[0072], [0082]-[0084], [0122]-[0132], [0233]-[0239], examples 2-6, tables 4, 6 | 1-8, 10-16<br>9, 12-16 |
| Y | WO 2018/088575 A1 (MITSUBISHI CHEMICAL CORPORATION) 17.05.2018 (2018-05-17) paragraphs [0118]-[0125] | 12-16 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 July 2020 (07.07.2020) | 21 July 2020 (21.07.2020) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.
PCT/JP2020/017686

| Patent Documents referred in the Report | Publication Date | Patent Family | Publication Date |
|---|---|---|---|
| JP 2017-128675 A | 27 Jul. 2017 | (Family: none) | |
| WO 2014/104134 A1 | 03 Jul. 2014 | US 2015/0291724 A1<br>claim 9, paragraphs [0097]-[0100], [0115]-[0118], [0180]-[0193], [0322]-[0332], examples 2-6, tables 4, 6<br>EP 2940056 A1<br>CN 104884499 A<br>KR 10-2015-0099531 A<br>TW 201434878 A | |
| WO 2018/088575 A1 | 17 May 2018 | US 2019/0330421 A1<br>paragraphs [0189]-[0202]<br>EP 3569635 A1<br>CN 110167991 A<br>KR 10-2019-0102224 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004059706 A
- JP 2015081278 A
- JP 2015166466 A
- JP 2017519652 A
- JP 2018053193 A
- JP 2004182980 A
- JP 2019083087 A
- JP 2019083090 A


### Non-patent literature cited in the description


- Saishin Polyurethane Zairyou to Ouyougijutsu (The Comprehensive Materials and Technology for a Novel Polyurethane Production). CMC Publishing CO., LTD
- **ZWEIFEL HANS et al.** Plastics Additives Handbook. Hanser Gardner Publications, 2001, 901-948
- **GEORGE WYPYCH.** Handbook of Plasticizers. ChemTec Publishing, 2004
- **ZWEIFEL HANS et al.** Plastics Additives Handbook. Hanser Gardner Publications, 2001, 813-882
- **ZWEIFEL HANS et al.** Plastics Additives Handbook. Hanser Gardner Publications, 2001, 1-140
- **ZWEIFEL HANS et al.** Plastics Additives Handbook. Hanser Gardner Publications, 2001, 141-426
- **ZWEIFEL HANS et al.** Plastics Additives Handbook. Hanser Gardner Publications, 2001, 725-812